# EUROPEAN PATENT SPECIFICATION

(11) **EP 2 153 516 B1**
(45) Date of publication and mention of the grant of the patent: **09.03.2011**
(21) Application number: 09732315.8
(22) Date of filing: 16.04.2009
(51) Int. Cl.: H02P 6/14, H02P 6/18

(54) **INVERTER CONTROLLER, COMPRESSOR, AND ELECTRIC HOME APPLIANCE**
WECHSELRICHTERSTEUERUNG, VERDICHTER UND ELEKTRISCHES HAUSHALTSGERÄT
DISPOSITIF DE COMMANDE D'ONDULEUR, COMPRESSEUR, ET APPAREIL ÉLECTROMÉNAGER

(30) Priority: 18.04.2008 JP 2008108607; 12.11.2008 JP 2008289554
(43) Date of publication of application: 17.02.2010
(73) Proprietor: Panasonic Corporation, Kadoma-shi Osaka 571-8501 (JP)
(72) Inventor: OGAHARA Hideharu, Osaka-shi, Osaka 540-6207 (JP); KODA Atsushi, Osaka-shi, Osaka 540-6207 (JP)
(74) Representative: Grünecker, Kinkeldey, Stockmair & Schwanhäusser Anwaltssozietät
(86) International application number: PCT/JP2009/001749
(87) International publication number: WO 2009/128268

(56) References cited:
- WO-A-2006/107040
- JP-A- 8 140 391
- JP-A- 8 163 891
- JP-A- 11 075 396
- JP-A- 2000 037 093

## Description

### Technical Field

The present invention relates to inverter controllers to be used in brushless DC motors. It also relates to compressors and electric home appliances such as a refrigerator.

### Background Art

A conventional inverter controller has carried out a wide angle control in which a conduction angle is increased up to 120 degree in electrical angles for increasing a work range of an inverter, thereby boosting an output of the inverter controller. Patent Document 1 discloses an example of such inverter controllers.

A conduction waveform of 120 degree in electric angles has been generally employed because it allows the inverter to be controlled with ease. In a driving system of a brushless DC motor, switches of respective phases of the inverter are conductive only in the range of 120 degree in electric angles although 180 degree is available. The range of remaining 60 degree is thus left uncontrolled.

During this uncontrolled range, the inverter cannot output a desirable voltage, so that a utilization ratio of the DC voltage by the inverter is obliged to stay at a low level. This low utilization ratio causes a low terminal voltage of the DC brushless motor, thereby decreasing the work range of the motor, namely, the max. rpm is obliged to stay at a low level.

Patent Document 1 thus discloses that the conduction angle of a voltage-type inverter is set at a given value greater than 120 degree and not greater than 180 degree in electric angles, so that the uncontrolled range becomes less than 60 degree in electric angles. As a result, the terminal voltage of the motor is boosted and the work range can be increased.

In recent years, permanent magnets are buried in a rotor for obtaining a greater efficiency of the motor, because this structure allows producing the torque caused by reluctance in addition to the torque caused by magnets. This interior magnet type DC brushless motor can thus advantageously obtain the greater torque as a whole without increasing the motor current.

A phase-advancing control is carried out in order to make full use of this reluctance torque. The phase-advancing control advances a voltage phase of the inverter with respect to the induction voltage of the motor. This control method also can use a weakening magnetic flux efficiently for boosting an output torque.

A compressor employs an inverter controller; however, the inverter controller does not use a sensor, such as Hall elements, from the view point of environmental condition, reliability and maintenance. In other words, the compressor employs a sensor-less inverter controller which senses a magnetic pole position of the rotor with an induction voltage occurring on a stator wiring. This sensor-less inverter controller generally uses the uncontrolled range, i.e. 60 degree in electric angles for observing the induction voltage occurring at the motor terminals while the switches of the upper and lower arms are turned off, thereby obtaining the magnetic pole positions of the rotor.

The conventional inverter controller discussed above is detailed hereinafter with reference to Figs. 13 - 15. Fig. 13 shows a structure of the conventional inverter controller. Fig. 14 shows characteristics of the conventional inverter controller with respect to the relation between load torque and rpm when the wide angle control is carried out. Fig. 15 shows signals' waveforms as well as processed contents of respective sections of the conventional inverter when the wide angle control at 150 degree in electric angles is carried out.

Magnetic pole position sensing circuit 10 is formed of differential amplifier 11, integrator 12, and zero-cross comparator 13. A voltage at neutral point 3d of stator windings 3u, 3v, and 3w connected in Y-shape is supplied to a reversal input terminal of amplifier 11b via resistor 11a. A voltage at neutral point 4d of resistors 4u, 4v, and 4w connected in Y-shape is supplied straightly to non-reversal input terminal of amplifier 11b. Connection of resistor 11c between an output terminal and the reversal input terminal makes amplifier 11b work as differential amplifier 11.

An output signal from the output terminal of amplifier 11 is supplied to integrator 12 formed of resistor 12a and capacitor 12b connected together in series.

An output signal (a voltage at a junction point between resistor 12a and capacitor 12b) from integrator 12 is supplied to the non-reversal input terminal of zero-cross comparator 13. To this non-reversal input terminal, a voltage at neutral point 3d is supplied. Comparator 13 outputs a magnetic pole sensing signal from its output terminal. Amplifier 11, integrator 12, and zero-cross comparator 13 form magnetic pole position sensing circuit 10 which can sense the magnetic pole position of rotor 3r of brushless DC motor 3.

A magnetic pole position sensing signal output from sensing circuit 10 is supplied to microprocessor 20, where the signal undergoes a phase correction for measuring a cycle or setting a phase angle and a conduction angle. The sensing signal then calculates a timer value per cycle of electric angle, and determines commutation signals of switching transistors Tru, Trx, Trv, Try, Trw, and Trz.

Microprocessor 20 outputs a voltage instruction based on an rpm instruction, it modulates the voltage instruction in PWM (pulse width modulation) and controls a duty, i.e. on/off ratio of the PWM signal, based on the difference between the rpm instruction and an actual rpm for outputting pulse-width modulated (PWM) signals covering the three phases. If the actual rpm is lower than the instructed rpm, microprocessor 20 increases the duty, and if the actual rpm is higher than the instructed one, it reduces the duty.

The PWM signals are supplied to driving circuit 30, which then outputs the driving signals to be supplied to respective base terminals of switching transistors Tru, Trx, Trv, Try, Trw, and Trz.

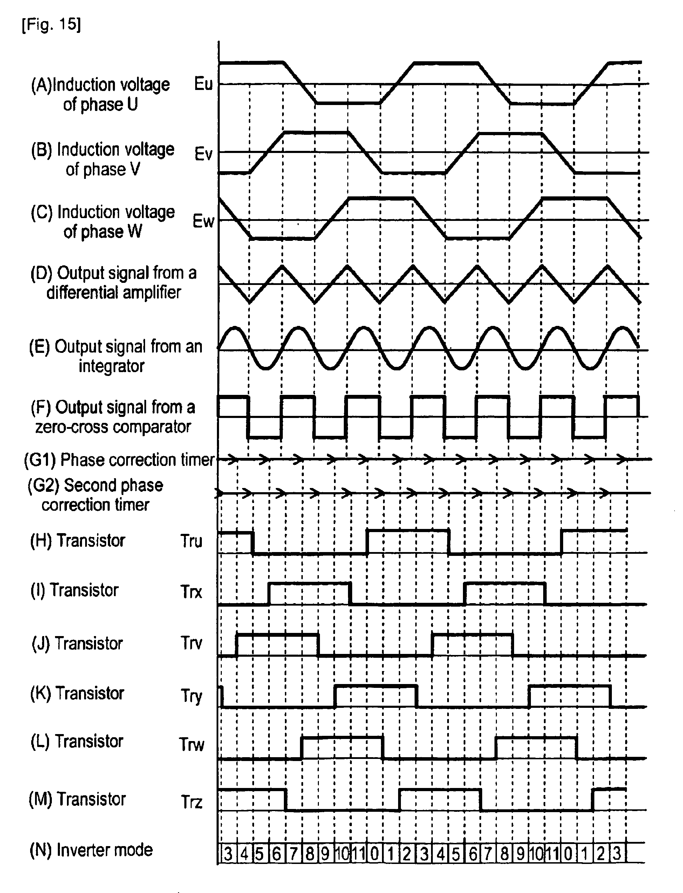

The work of the foregoing inverter controller upon being powered is demonstrated hereinafter with reference to Fig. 15, in which signals (A) - (C) correspond to induction voltages Eu, Ev, and Ew of phases U, V, and W of brushless DC motor 3. Signals (A) - (C) vary with each one of these phases shifted by 120 degree from one another.

Signal (D) is output from differential amplifier 11, and signal (E) is supplied from integrator 12 and shaped in an integrating waveform, which is supplied to zero-cross comparator 13, whereby excitation switching signals which rise and fall at the zero-cross point are output as the magnetic pole position sensing signals, i.e. signals (F). Phase correction timer G1 starting at the rising and the falling of the excitation signal, and second phase correction timer G2 being started by first phase correction timer G 1 advance a commutation pattern, i.e. an inverter mode (signal N), by one step.

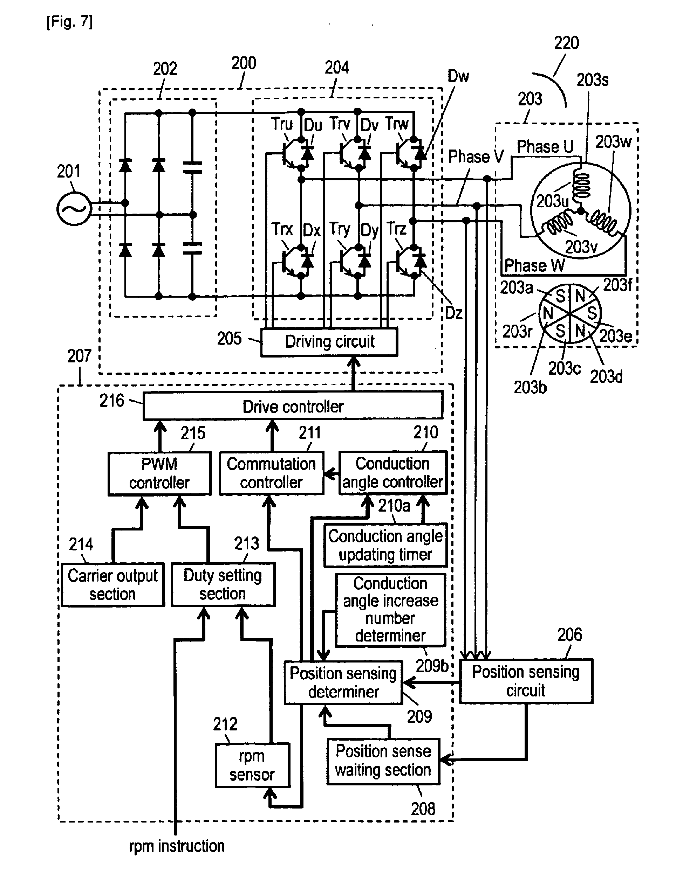

A conduction timing of phase U is calculated based on the induction voltage waveform of phase W, and first phase correction timer G1 can control an amount of phase advancing of the inverter. In Fig. 7, conduction angle is set at 150 degree and phase advancing angle is set at 60 degree. First timer G1 thus has a value corresponding to 45 degree, and second timer G2 has a value corresponding to 30 degree.

As a result, on-off statuses of switching transistors Tru, Trx, Trv, Try, Trw, and Trz can be controlled as indicated by signals (H) - (M) in response to respective inverter modes.

Brushless DC motor 3, of which conduction period is set between 120 - 180 degree, can be driven as discussed above, so that the phase of inverter voltage can be advanced from that of the induction voltage of the motor.

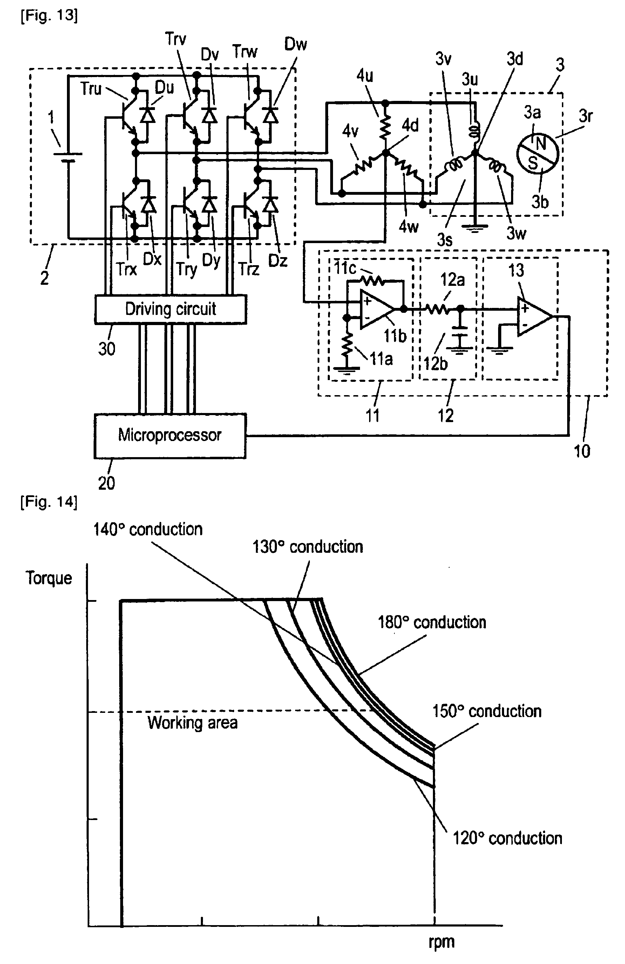

The foregoing conventional structure senses induction voltages occurring on stator windings 3u, 3v, and 3w based on the rotation of rotor 3r, and shifts the phases of these induction voltages with integrator 12 having a delay of 90 degree, thereby obtaining a position sensing signal which corresponds to a magnetic pole of rotor 3r. The conduction timings to stator windings 3u, 3v, and 3w are determined based on the position sensing signal. As a result, the art shown in Fig. 13 poorly responds to a sharp acceleration or a sharp deceleration because it employs integrator 12 having a phase delay of 90 degree.

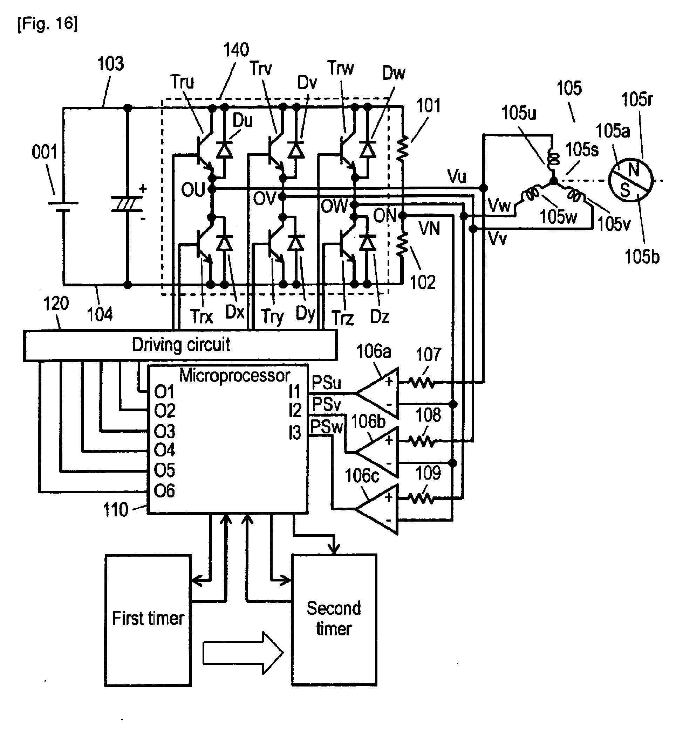

A position sensing circuit, of which responsiveness is improved, is thus proposed in, e.g. Patent Document 2. Another conventional inverter controller disclosed in Patent Document 2 and employing the position sensing circuit improved its responsiveness is described hereinafter with reference to Figs. 16 - 17.

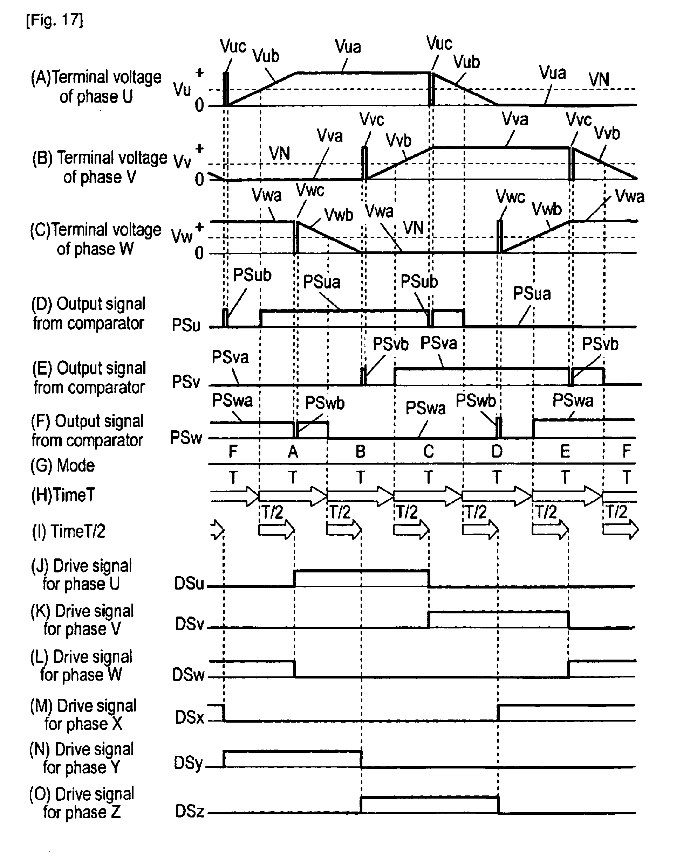

Fig. 16 shows a structure of the inverter controller disclosed in Patent Document 2, and Fig. 17 shows signals' waveforms as well as processed contents of respective sections of the conventional inverter shown in Fig. 16.

As shown in Fig. 16, three pairs of switching transistors Tru, Trx, Trv, Try, Trw, and Trz are connected together respectively in series between the terminals of DC power supply 001, thereby forming inverter circuit 140. Brushless DC motor 105 is formed of rotor 105r and stator 105s having four poles with distributed windings. Permanents magnets 105a and 105b are buried in rotor 105r, namely, motor 105 is an interior magnet type.

The junction points of each pair of switching transistors connect to the terminals of stator windings 105u, 105v, and 105w of respective phases connected in Y-shape. The foregoing junction points also connect to resistors 107, 108, and 109 connected also in Y-shape. Protective reflux diodes Du, Dx, Dv, Dw, and Dz are connected between respective collectors and emitters of switching transistors Tru, Trx, Trv, Try, Trw, and Trz.

Resistors 101, 102 are connected together in series between bus 103 and bus 104, and their common junction point, i.e. sensing terminal ON, is supposed to output voltage VN at a virtual neutral point. Voltage VN corresponds to a half voltage of DC power supply 001, namely, a voltage at a neutral point of stator windings 105u, 105v, and 105w of brushless DC motor 105.

Comparators 106a, 106b, and 106c connect to output terminals OU, OV, and OW via resistors 107, 108, and 109 at their non-reversal input terminals (+). Their reversal input terminals (-) connect to sensing terminal ON. The output terminals of those comparators 105a, 106b, and 106c connect to input terminals I1, I2, and I3 of microprocessor 110 working as a logic section. Output terminals 01 - 06 of microprocessor 110 work driving transistors Tru, Trx, Trv, Try, Trw, and Trz via driving circuit 120. Motor 105 has four poles with distributed windings, and rotor 105r has permanent magnets 105a, 105b placed on its surface, namely, the motor is a surface magnet type, so that the conduction angle is set at 120 degree, and advancing angle is set at 0 degree.

The work of this conventional inverter controller is described hereinafter with reference to Fig. 17. Signals (A) - (C) indicate terminal voltages Vu, Vv, and Vw of stator windings 105u, 105v, and 105w during a regular working. These terminal voltages show a waveform synthesized of voltages Vua, Vva, Vwa supplied from inverter circuit 140, induction voltages Vub, Vvb, Vwb occurring on stator windings 105u, 105v, 105w, and pulse-like spike voltages Vuc, Vvc, Vwc produced by a conduction of any one of diodes Du, Dx, Dv, Dy, Dw, Dz in inverter circuit 140. Comparators 106a, 106b, 106c compare these terminal voltages Vu, Vv, Vw with voltage VN at a virtual neutral point, i.e. a half voltage of DC power supply 001, and the comparators output signals PSu, PSv, PSw as signals (D) - (F).

In this case, output signals PSu, PSv, PSw from the comparators are formed of periods PSua, PSva,PSwa indicating the positive status, negative status and the phase of the forgoing induction voltages Vub, Vvb, Vwb, and periods PSub, PSvb, PSwb corresponding to pulse-like signals Vuc, Vvc, Vwc.

The pulse-like signals Vuc, Vvc, Vwc are neglected by a wait timer, so that the output signals PSu, PSv, PSw from the comparators resultantly indicate the positive status, negative status and the phases of induction voltages Vub, Vvb, Vwb.

Microprocessor 110 recognizes six modes A - F indicated by signal (G) based on the statuses of signals PSu, PSv, PSw supplied from the comparators, and outputs driving signals DSu (signal J) - Dsz (signal O with a delay of 30 degree in electric angles from an instant at which output signals PSu, PSv, PSw change their levels.

Time duration T (H) of respective modes A - F indicates 60 degree in electric angles, and a half of the time duration (signal I) of modes A - F, i.e. T/2, indicates a time delay corresponding to 30 degree in electric angles.

As discussed above, the art disclosed in Patent Document 2 senses a position and a status of rotor 105r with the induction voltages occurring on stator windings 105u, 105v, 105w in response to the spin of rotor 105r of motor 105. On top of that, time variation T of the induction voltages is sensed in order to determine a driving signal based on the conduction modes and timings to stator windings lost, 105v, 105w. The driving signal determined is used for the conduction to the stator windings of respective phases.

The conventional structure disclosed in Patent Document 1 proposes magnetic pole position sensing circuit 10 that can sense a magnetic pole in the range of 180 degree in electric angles. However, the use of the integrator incurs a delay of 90 degree in electric angles, so that circuit 10 poorly responses to a sharp change in rpm, e.g. a change in load, and the motor sometimes falls into out-of-sync, or stops working. Another conventional structure disclosed in Patent Document 2 proposes a position sensing circuit free from a delay of 90 degree in electric angles. However, this circuit employs a wide angle control where a conduction angle is enlarged to over 120 degree, or carries out a phase advancing control in which a voltage phase of the inverter is advanced with respect to the phases of induction voltages of the motor. In other words, the number of winding turns of stator windings 105u, 105v, 105w is increased for a greater efficiency. This structure invites an increment both in the inductance and in the width of spike voltages, so that a position sensible range is decreased.

Use of a stator having concentrated windings will increase an efficiency and output torque; however, in this case, when this brushless DC motor 105 employs six poles, the position sensible range is reduced to 2/3 in mechanical angles from the case employing four poles.

As discussed above, these technical ideas, such as the wide angle control, phase advancing control, increment in the turns of windings, and increment in the number of poles, however, resultantly reduce the position sensible range in mechanical angles. When a change in load or in voltage occurs accompanying a sharp change in rpm, those technical ideas discussed above cause the motor to fail in sensing a position, so that the motor falls into out-of-sync and stops the work.
[Patent Citation 1]: International Publication No. 95/27328 Pamphlet
[Patent Citation 2];
   Unexamined Japanese Patent Application Publication No. H01- 8890

Further patent document WO2008/107040 relates to a brushless motor control apparatus and a control method. More specifically, it relates to the problem of providing a driving method that prevents the duration of the spike voltages to extend over the position sensing period (cf. paragraph [0069]). This is achieved by measuring the duration TP of the spike voltage (cf. paragraph [0070]) and by modifying the advance of the conduction angle by a value computed on the basis of such spike voltage duration TP.

Moreover, patent document JP 8140391 relates to a brushless motor in which accurate position detection is realized. This is achieved by creating a conduction switching signal based on a position detection signal with a predetermined time lag behind the position detection signal. Moreover, a delay time altering means is configured so as to alter the delay time depending on the width of the spike voltage generated at the time of commutation of the brushless motor.

### [Disclosure of Invention]

The present invention aims to provide a reliable inverter controller which can instantaneously change a conduction angle in response to a reduction in a position sensible range caused by a sharp change in load or in voltage, thereby preventing a motor from falling into out-of-sync and stopping the work.

The invention is defined in device claim 1. The dependent claims recite advantageous embodiments of the invention.

The foregoing structure allows the conduction angle of the inverter circuit to be reduced in a range greater than a lower limit of a given angle range in electric angles at the following case: a time difference between the intervals between each of the position senses by the position sensing determiner and the wait time set by the position sense waiting section becomes shorter than a predetermined reference time.

The structure discussed above allow increasing the position sensible rang, and yet, eliminating a miss in sensing the magnetic pole position of the rotor.

### Brief Description of the Drawings

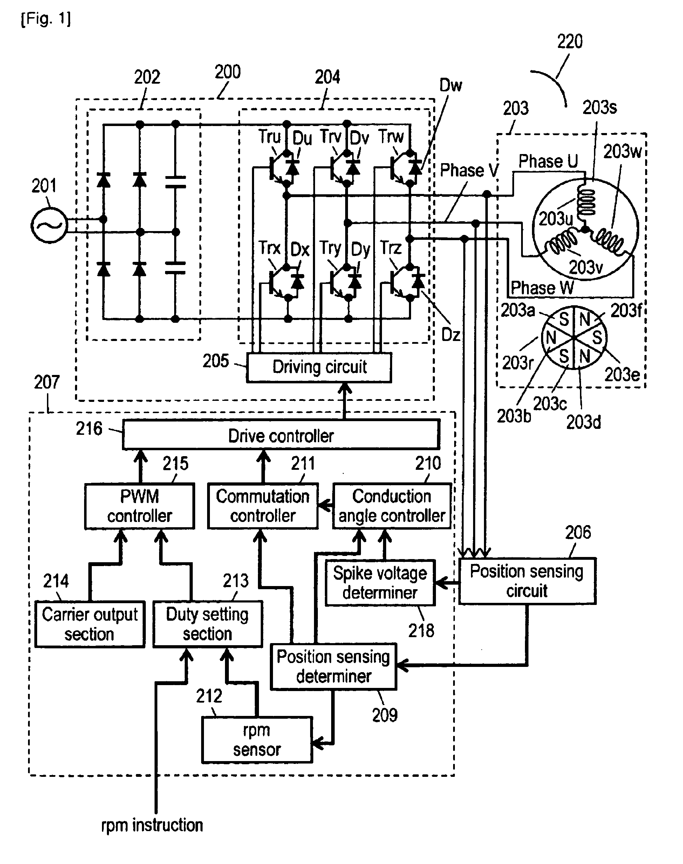

[fig.1] Fig. 1 shows a block diagram of an inverter controller in accordance with a first embodiment of the present invention.

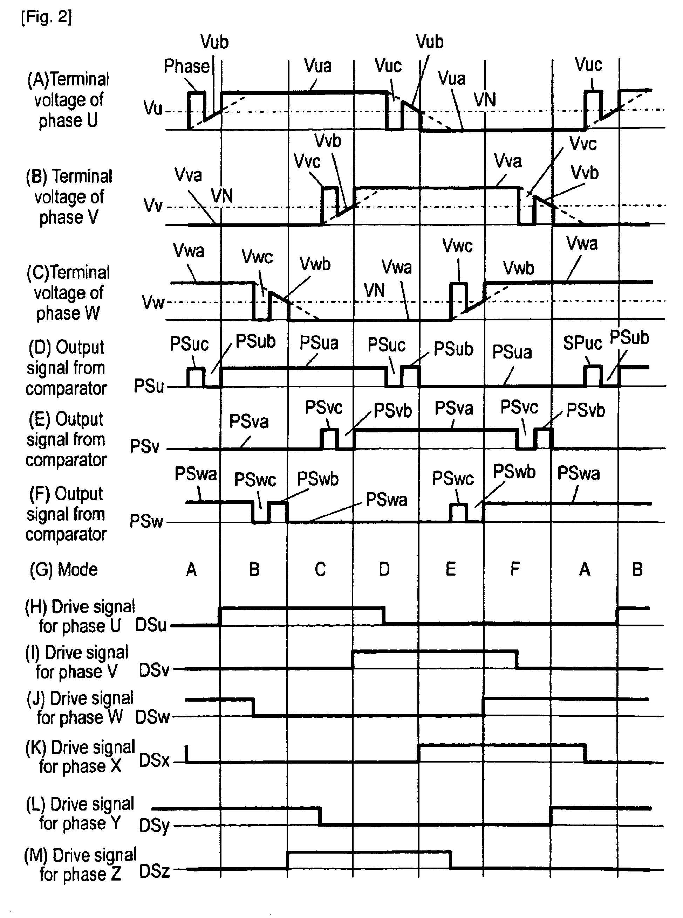

[fig.2]Fig. 2 shows signal waveforms of respective sections of the inverter controller in accordance with the first embodiment.

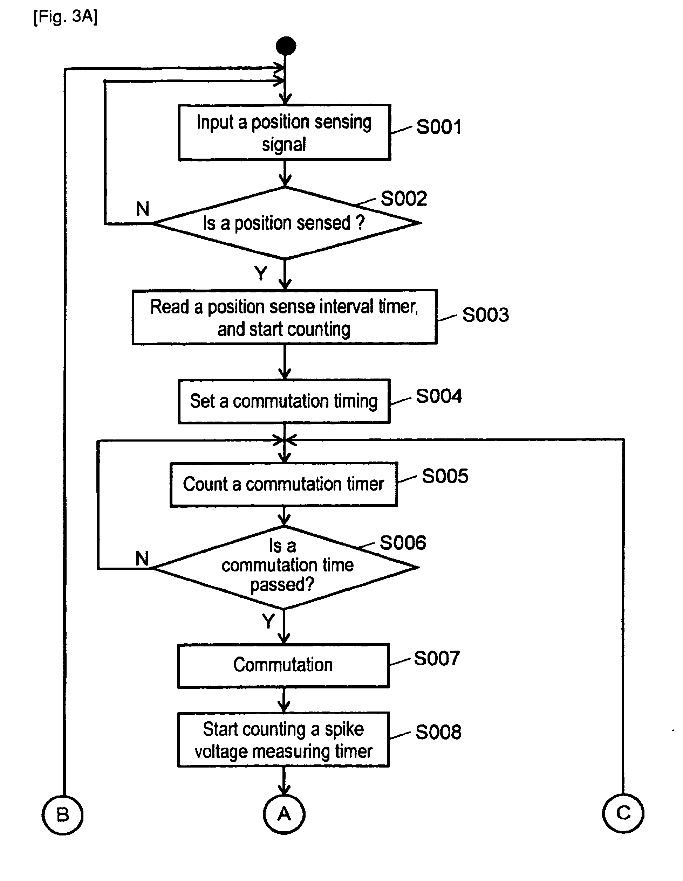

[fig.3A] Fig. 3A shows a flowchart illustrating the work done by the inverter controller in accordance with the first embodiment.

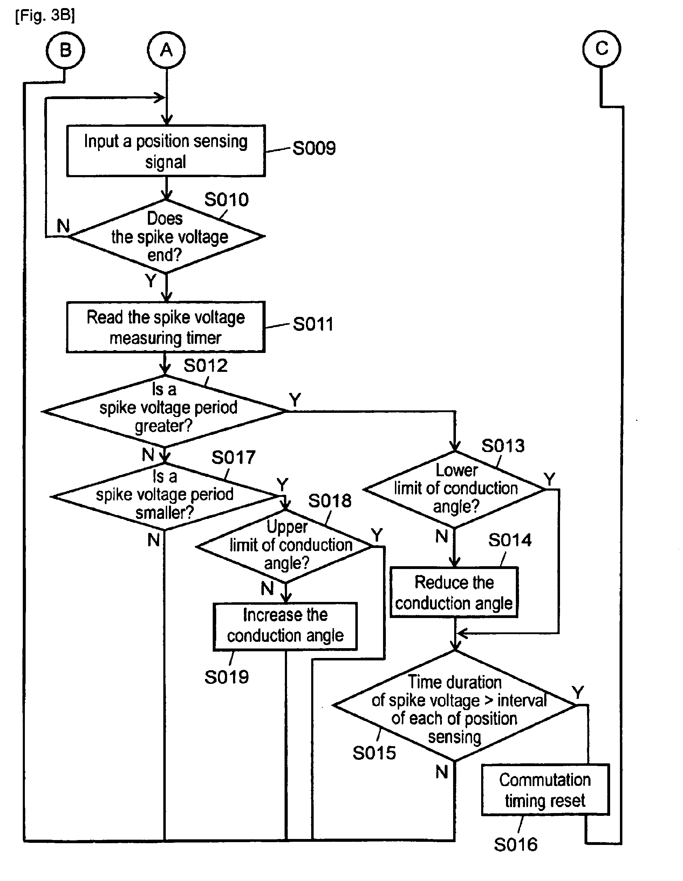

[fig.3B]Fig. 3B shows a flowchart illustrating the work done by the inverter controller in accordance with the first embodiment.

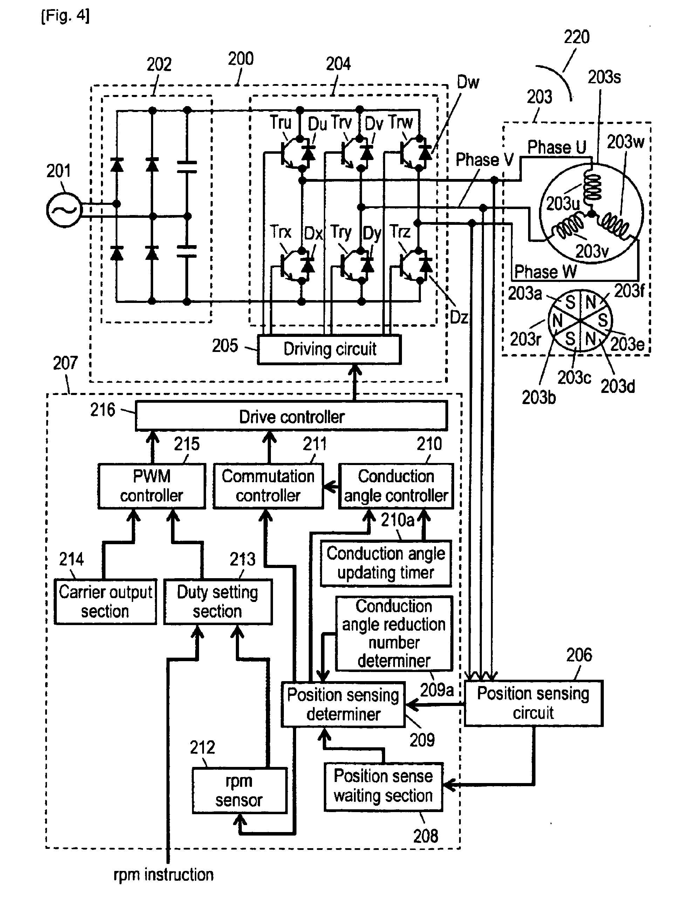

[fig.4]Fig. 4 shows a block diagram of an inverter controller in accordance with a second embodiment of the present invention.

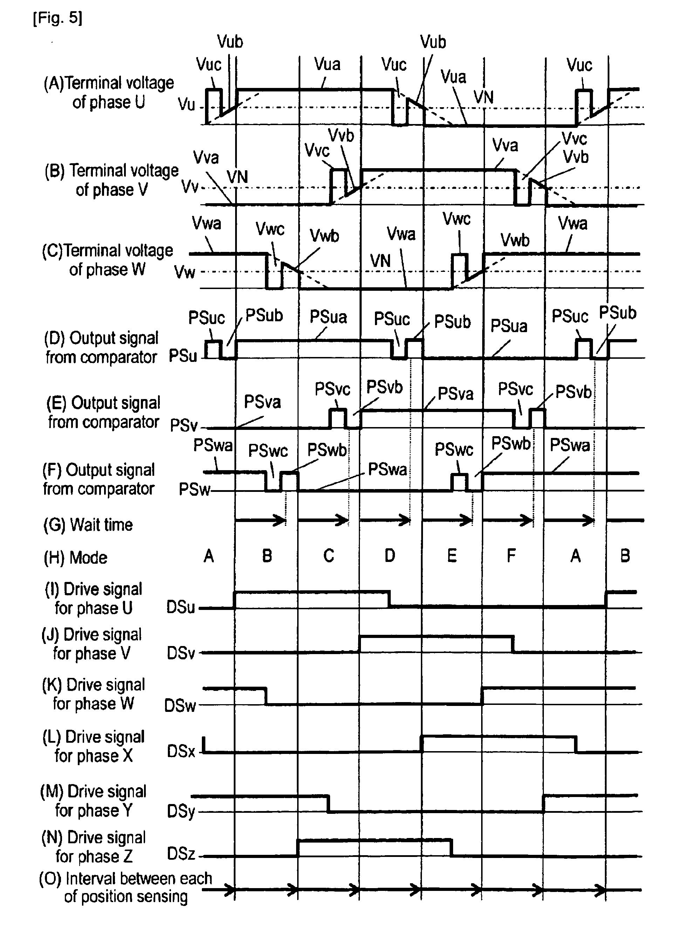

[fig.5]Fig. 5 shows signal waveforms of respective sections of the inverter controller in accordance with the second embodiment.

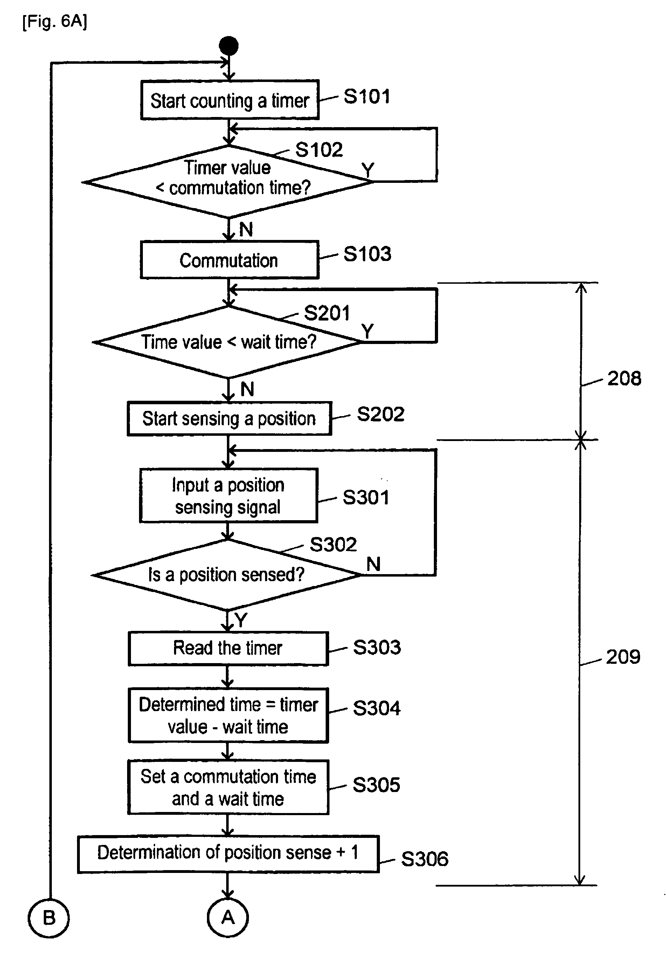

[fig.6A]Fig. 6A shows a flowchart illustrating the work done by the inverter controller in accordance with the second embodiment.

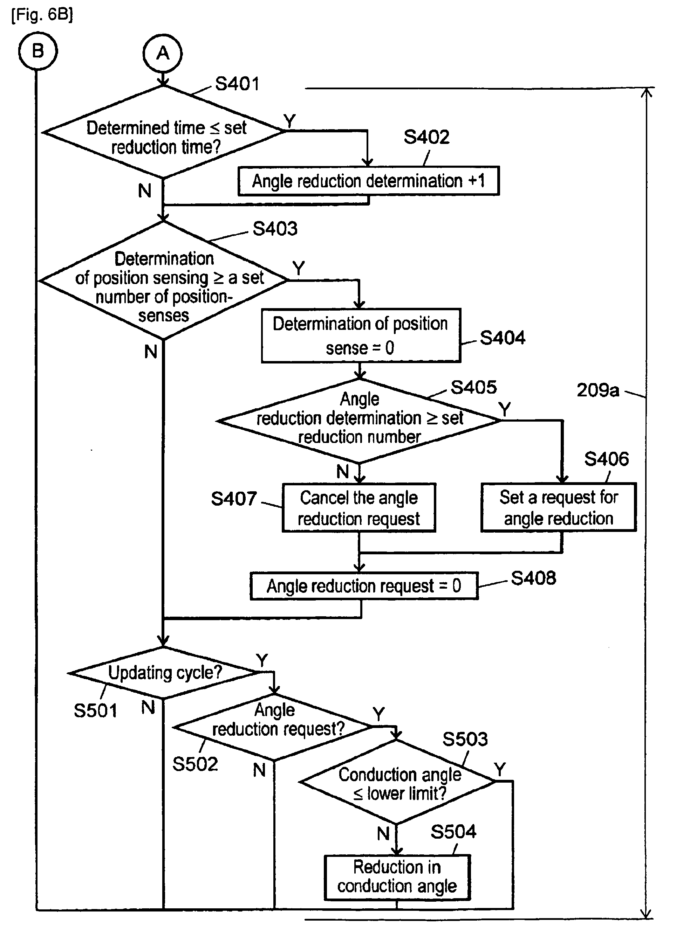

[fig.6B]Fig. 6B shows a flowchart illustrating the work done by the inverter controller in accordance with the second embodiment.
[fig.7]Fig. 7 shows a block diagram of an inverter controller in accordance with a third embodiment of the present invention.

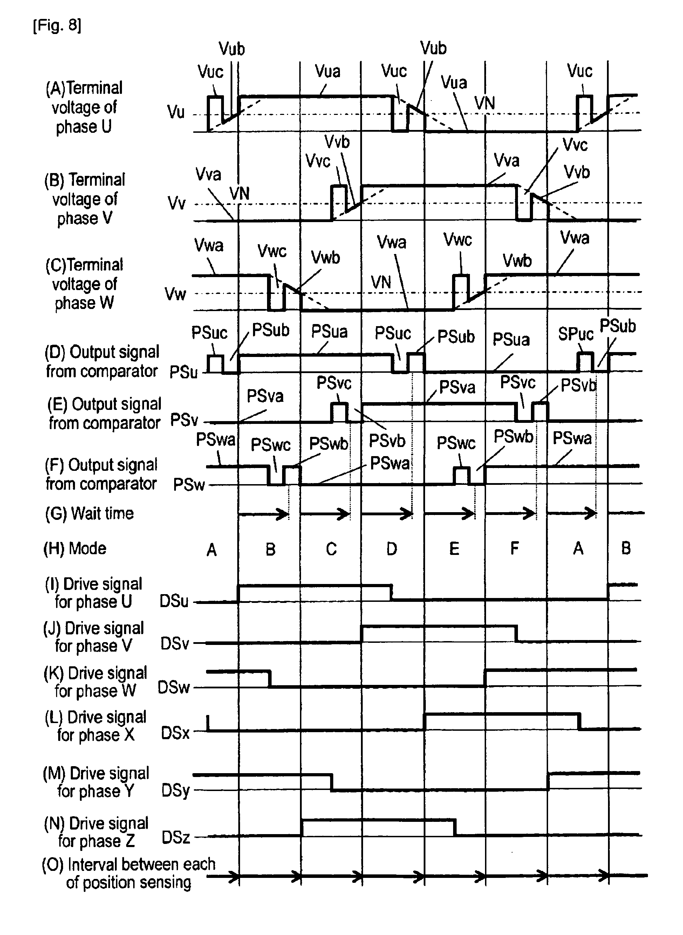

[fig.8]Fig. 8 shows signal waveforms of respective sections of the inverter controller in accordance with the third embodiment.

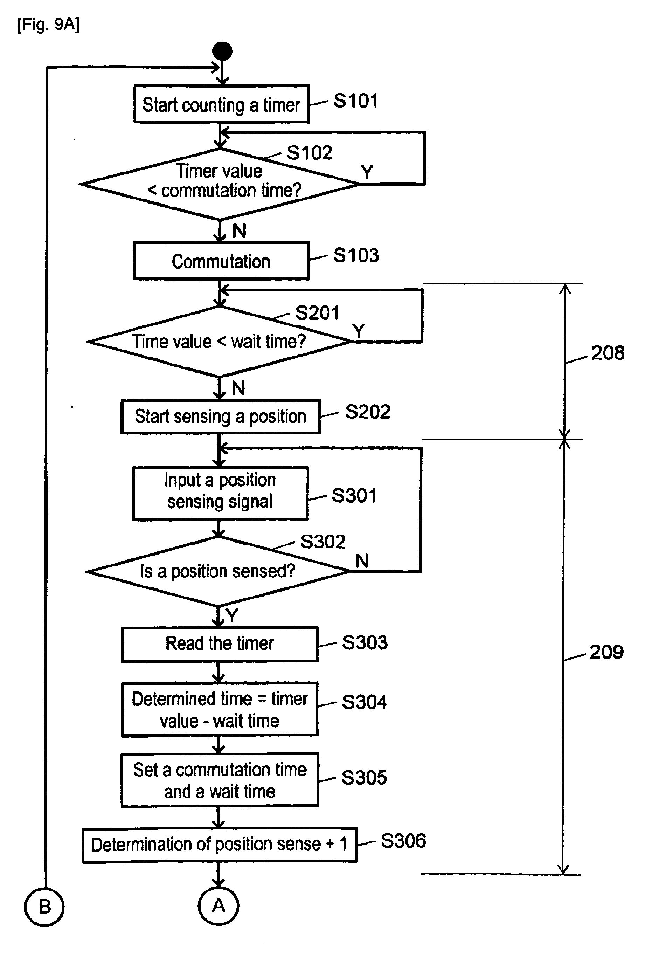

[fig.9A]Fig. 9A shows a flowchart illustrating the work done by the inverter controller in accordance with the third embodiment.

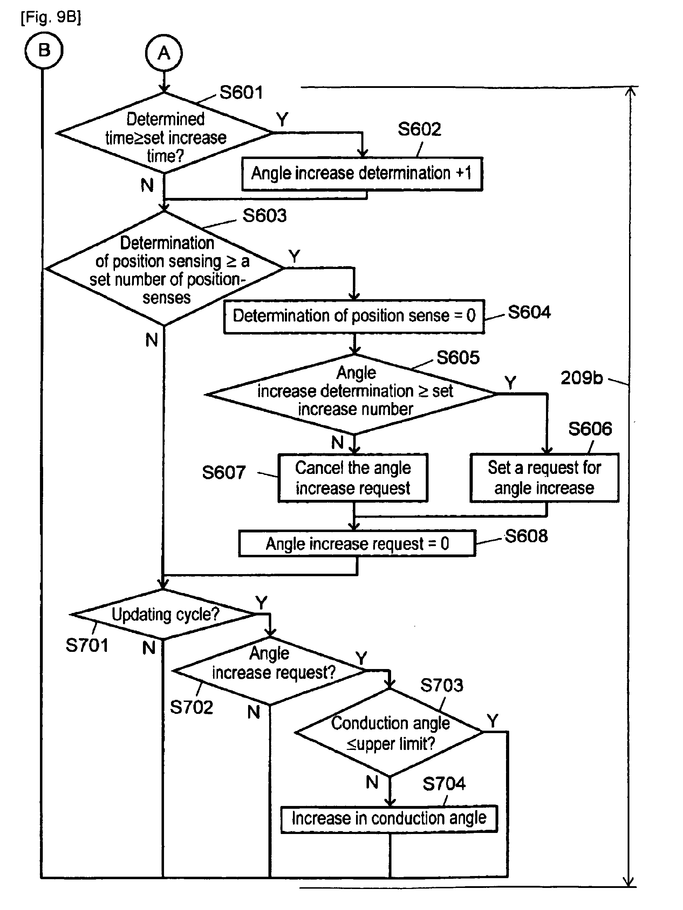

[fig.9B]Fig. 9B shows a flowchart illustrating the work done by the inverter controller in accordance with the third embodiment.

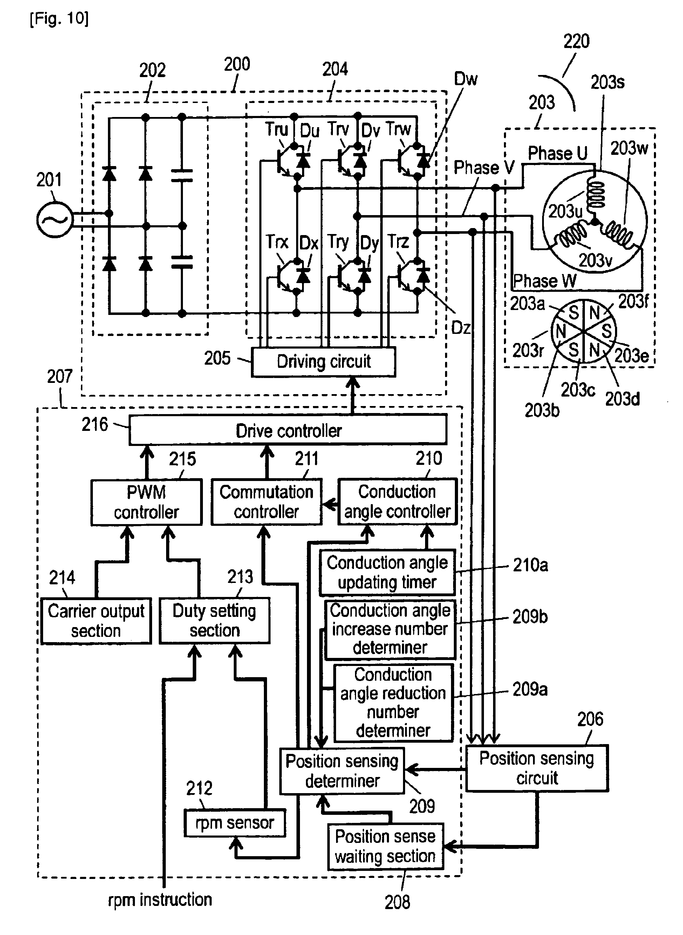

[fig.10]Fig. 10 shows a block diagram of an inverter controller in accordance with a fourth embodiment of the present invention.

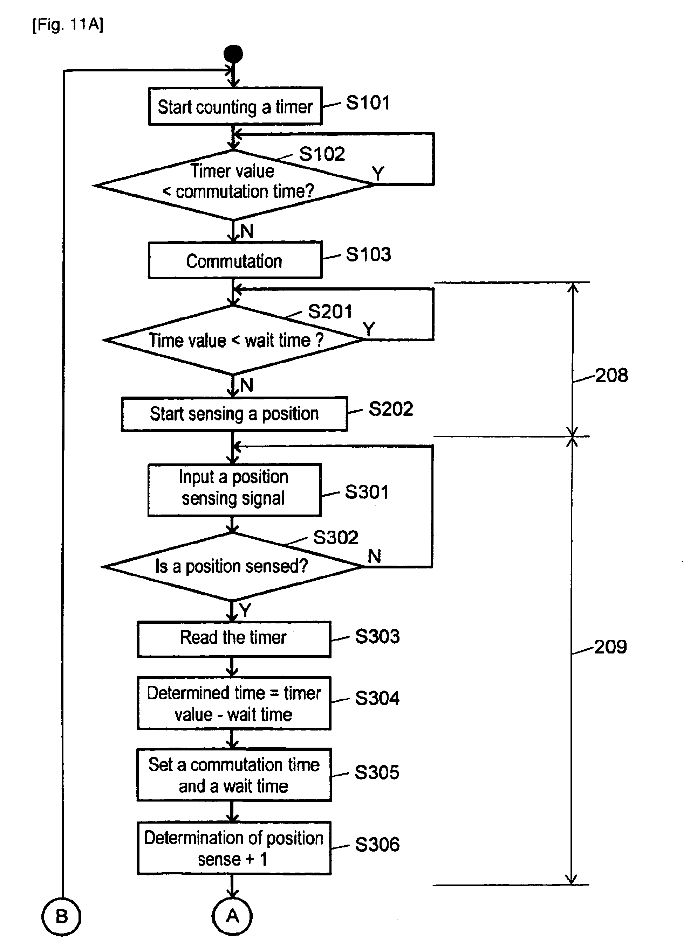

[fig.11A]Fig. 11A shows a flowchart illustrating the work done by the inverter controller in accordance with the fourth embodiment.

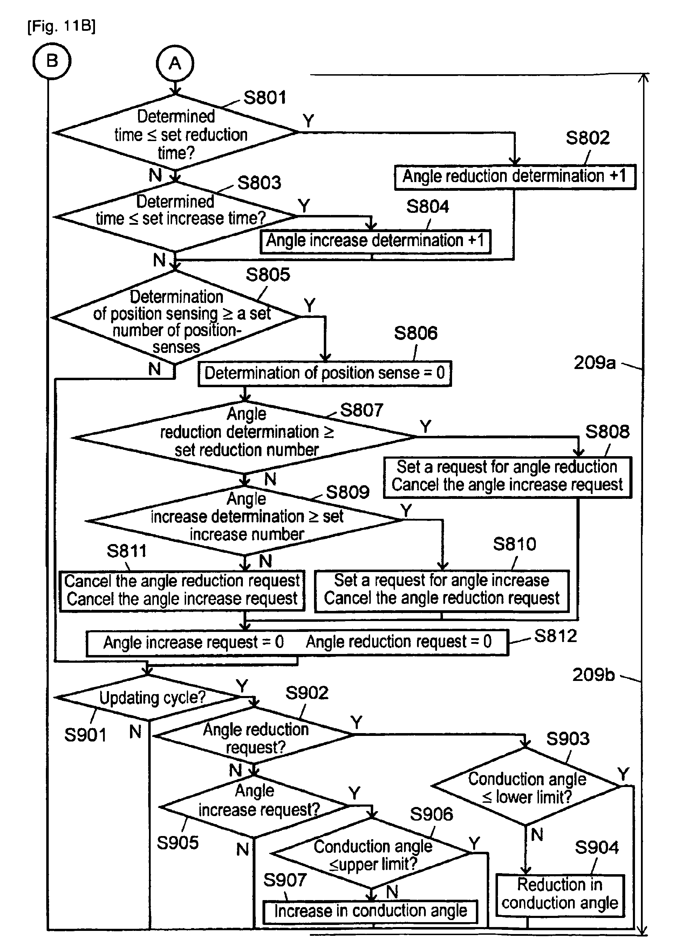

[fig.11B]Fig. 11B shows a flowchart illustrating the work done by the inverter controller in accordance with the fourth embodiment.

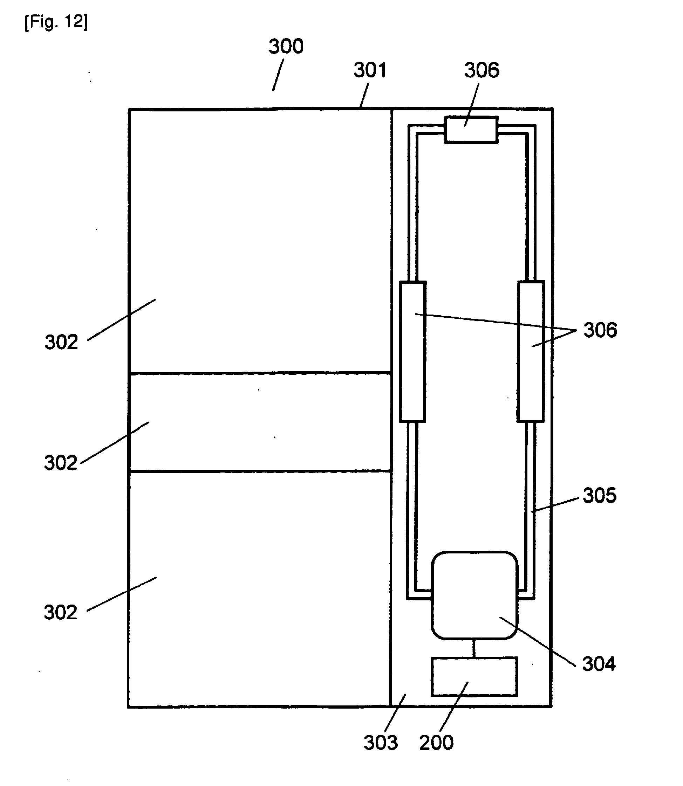

[fig.12]Fig. 12 shows a schematic diagram of a refrigerator in accordance with the fourth embodiment.
[fig.13]Fig. 13 shows a structure of a conventional inverter controller.
[fig.14]Fig. 14 shows the characteristics between the load torque and the rpm of the conventional inverter controller.
[fig.15]Fig. 15 shows signal waveforms and processed contents of the respective sections of the conventional inverter controller.
[fig.16]Fig. 16 shows a structure of another conventional inverter controller.
[fig.17]Fig. 17 shows signal waveforms of respective sections of the conventional inverter controller.

### Explanation of Reference

200 inverter controller
201 commercial power source
202 rectifier
203 brushless DC motor
203r rotor
203a, 203b, 203c, 203d, 203e, 203f permanent magnet
203s stator
203u, 203v, 203w stator winding
204 inverter circuit
205 driving circuit
206 position sensing circuit
207 microprocessor
208 position sense waiting section
209 position sensing determiner
209a conduction angle reduction number determiner
209b conduction angle increase number determiner
210 conduction angle controller
210a conduction angle updating timer
211 commutation controller
212 rpm sensor
213 duty setting section
214 carrier output section
215 PWM controller
216 drive controller
218 spike voltage determiner
220 compressor
300 refrigerator
301 main unit
302 stock room
303 machine room
304 compressor
305 pipe
306 refrigerating cycle element

### Best Mode for Carrying Out the Invention

Exemplary embodiments of the present invention are demonstrated hereinafter with reference to the accompanying drawings. The embodiments will not limit the present invention.

### Mode for the Invention 1

Fig. 1 shows a block diagram of an inverter controller in accordance with the first embodiment of the present invention. Fig. 2 shows signal waveforms of respective sections of the inverter controller in accordance with the first embodiment. Fig. 3 shows flowcharts illustrating the work done by the inverter controller in accordance with the first embodiment.

In Fig. 1, inverter controller 200 connects to commercial power source 201 and a compressor (not shown), and includes rectifier 202 and inverter circuit 204. Rectifier 202 converts commercial power source 201 into a DC power source, and inverter circuit 204 drives brushless DC motor 203 of the compressor. Inverter controller 200 further includes driving circuit 205 that drives inverter circuit 204, position sensing circuit 206 that senses a terminal voltage of motor 203, and microprocessor 207 that controls inverter circuit 204.

Microprocessor 207 includes rpm sensor 212, commutation controller 211, duty setting section 213, PWM controller 215, drive controller 216, carrier output section 214. Microprocessor 207 further includes position sensing determiner 209 that senses a magnetic pole position of motor 203 based on an output signal from position sensing circuit 206, spike voltage determiner 218 that senses a spike voltage, and conduction angle controller 210 that determines a conduction angle based on outputs from position sensing determiner 209 and spike voltage determiner 218.

Brushless DC motor 203 has six poles with concentrated salient windings, so that it is formed of stator 203s having three-phase windings and rotor 203r. Stator 203s has six poles and nine slots, and stator windings 203u, 203v, 203w of the respective phases have 189 turns each. Rotor 203r includes permanent magnets 203a, 203b, 203c, 203d, 203e, and 203f therein so that they can produce reluctance torque, namely, rotor 203r is an interior magnet type.

Inverter circuit 204 is formed of six switching transistors bridged in three-phase, Tru, Trx, Trv, Try, Trw, Trz, and reflux diodes Du, Dx, Dv, Dy, Dw, Dz connected to the respective transistors in parallel.

Position sensing circuit 206 is formed of a comparator (not shown) and so on, and the comparator compares a terminal voltage signal based on an induction voltage of motor 203 with a reference voltage, thereby obtaining a position sensing signal. This structure is similar to that disclosed in Patent Document 2.

Position sensing determiner 209 extracts only the position sensing signal from the output signals supplied by position sensing circuit 206, thereby obtaining a position signal of rotor 203r. Spike voltage determiner 218 extracts only a spike voltage signal from the output signals supplied by position sensing circuit 206.

Commutation controller 211 calculates a commutation timing by using the position signal supplied by determiner 209 and the conduction angle determined by conduction angle controller 210, thereby producing commutation signals for switching transistors Tru, Trx, Trv, Try, Trw, and Trz.

Rpm sensor 212 counts the position signals supplied by position sensing determiner 209 for a given period, and measures intervals between pulses, thereby calculating an rpm of motor 203.

Duty setting section 213 carries out an addition or a subtraction of duties by using a difference between the rpm calculated by rpm sensor 212 and the rpm instructed by an rpm instruction, thereby outputting the duty value to PWM controller 215. When an actual rpm is smaller than the instructed one, duty setting section 213 increases the duty, and when the actual rpm is greater than the instructed one, it decreases the duty. Carrier output section 214 sets a carrier frequency that switches switching transistors Tru, Trx, Trv, Try, Trw, Trz within a range between 3kHz and 10kHz.

PWM controller 215 outputs a PWM modulated signal by using the carrier frequency set by carrier output section 214 and the duty value set by duty setting section 213. Conduction angle controller 210 controls a conduction angle of commutation controller 211 based on the position sensing information obtained in position sensing determiner 209 and spike voltage determiner 218.

Drive controller 216 synthesizes a commutation signal, PWM modulated signal, conduction angle, and phase advancing angle together for producing a driving signal that turns on or off switching transistors Tru, Trx, Trv, Try, Trw, Trz, and then outputs the driving signal to driving circuit 205. Based on this driving signal, driving circuit 205 turns on or off switching transistors Tru, Trx, Trv, Try, Trw, Trz, i.e. carrying out the switching of the transistors, thereby driving brushless DC motor 203.

The waveforms shown in Fig. 2 of respective sections of the inverter controller are described hereinafter. Inverter controller 200 controls brushless DC motor 203 with conduction angle 150 degree and phase advance angle 15 degree.

Signals (A) - (C) represent terminal voltages Vu, Vv, Vw of phases U, V, W of motor 203, and the signals vary with each of phases shifted by 120 degree from one another. These terminal voltages show waveforms synthesized of the following voltages: voltages Vus, Vva, Vwa supplied from inverter circuit 204, induction voltages Vub, Vvb, Vwb produced on the stator windings 203u, 203v, 203w, and pulse-like spike voltages Vuc, Vvc, Vwc produced when any one of reflux diodes Du, Dx, Dv, Dy, Dw, Dz becomes conductive.

The comparators compare respective terminal voltages Vu, Vv, Vw with voltage VN at a virtual neutral point, i.e. a half voltage of the DC power supply voltage and supplied from rectifier 202 to inverter circuit 204, then the comparators output signals Psu, PSv, PSw, i.e. signals (D) - (F). These output signals are synthesized of periods Psua, Psva, Pswa corresponding to supply voltages Vua, Vva, Vwa, and periods Psuc, PSvc, PSwc corresponding to spike voltages Vuc, Vvc, Vwc, and perdios Psub, PSvb, PSwb corresponding to respective periods during which induction voltages Vub, Vvb, Vwb are compared with voltage VN at the virtual neutral point.

Microprocessor 207 recognizes six modes A - F indicated by signal (G) based on the statuses of signals Psu, PSv, PSw supplied by the respective comparators. Microprocessor 207 outputs driving signals Dsu - Dsz, i.e. signals (H) - (M).

Next, the work of this embodiment is detailed with reference to the flowchart shown in Fig. 3. First, in step S001, sense the position sensing signals Psu, PSv, PSw supplied from position sensing circuit 206. Then in step S002, determine a position-sense depending on the output status of switching transistors Tru, Trx, Trv, Try, Trw, Trz namely, the status of position sensing signals PSu, PSv, PSw in response to the work mode shown in Fig. 2. For instance, in the case of work mode A shown in Fig. 2, during the period of PSub, signal Psu senses H-level, signal PSv senses L-level, and signal PSw senses H-level, thereby sensing a rising of the terminal voltage of phase U. In a similar way, in the cases of other work modes, during the periods of PSub, PSvb, and PSwb, the status sensing of signals PSu, PSv, PSw allows sensing the rising or falling of the respective terminal voltages with respect to voltage VN at the virtual neutral point. The reason why the position sense is carried out during the periods of PSub, PSvb, and PSwb will be described later.

Determination of position sense in step S002 prompts the step (arrow mark Y after step S002) to move on to step S003, where a position sensing interval timer that counts a time duration from a previous position sensing is read, and then the timer is reset for restarting the count. The position sensing carried out by sensing the rising and falling of respective terminal voltages occurs six times in one cycle of the terminal voltage, so that the measuring the intervals between each of position senses allows obtaining a time duration corresponding to 60 degree in electric angles.

Next, in step S004, determine a commutation timing in response to the setting of a conduction angle and a phase advancing angle. For instance, Fig. 2 shows the work at conduction angle 150 degree and phase advancing angle 15 degree. Reference of 60 degree obtained through the intervals between each of position senses is used as a reference, the commutation timing is set such as an on-timing of driving signals Dsu, DSv, DSw, DSx, Dsy, DSz is 0 degree after sensing the position, and an off-timing of the driving signals is 30 degree after sensing the position.

Then in step S005, count a commutation timer which counts a time duration from the occurrence of a position sensing signal in order to compare this time duration with the commutation timing set in step 004, and then in step S006, wait until the time set by the commutation timing is passed, which prompts the step (arrow mark Y after step S006) to move on to step S007 where driving signals Dsu, DSv, DSw, DSx, Dsy, DSz are supplied to driving circuit 205, so that the commutation work is carried out.

In this case, just after any one of switching transistors Tru, Trx, Trv, Try, Trw, Trz is switched from on status to off status, the energy stored in stator windings 203u, 203v, 203w, which have been conductive just before the switching, is discharged due to a conduction of any one of reflux diodes Du, Dx, Dv, Dy, Dw, Dz. During this period, i.e. between the switching and the discharging, pulse-like spike voltages Vuc, Vvc, Vwc occur.

Regularly spike voltages Vuc, Vvc, Vwc should end before the cross point where induction voltages Vub, Vvb, Vwb pass through the voltage VN at the virtual neutral point. However, these spike voltages Vuc, Vvc, Vwc are changed their occurrence times by the inductance of stator windings 203u, 203v, 203w and the current available just before the transistors are turned off. If the time duration of spike voltages Vuc, Vvc, Vwc becomes longer due to the changes in occurrence times, the induction voltages Vub, Vvb, Vwb are concealed, so that the time duration exceeding an occurrence timing of the cross point will make it impossible to carry out a normal position sensing.

To overcome this problem, this embodiment places a spike measuring timer in step S008 for measuring the time duration of the spike voltages. Then in step S009, similarly to the work in step S001, sense the status of position sensing signals Psu, PSv, PSw supplied from position sensing circuit 206. Then in step S010, determine whether or not the spike voltages end depending on the output status of switching transistors Tru, Trx, Trv, Try, Trw, Trz, namely, depending on the status of position sensing signals Psu, PSv, PSw in response to the work mode shown in Fig. 2.

In the case of working mode A shown in Fig. 2, similarly to the previous description, during the period of PSuc, signal Psu senses L-level, signal PSv senses L-level, and signal PSw senses H-level, thereby sensing the end of the spike voltage. In a similar way, in the cases of the other work modes, during the periods of PSuc, PSvc, and PSwc, the status sensing of signals PSu, PSv, PSw allows sensing the end of the spike voltages.

In this case, the location of the position sensing signal locate is determined based on the progress after the commutation work. For instance, does it locate during the periods of PSuc, PSvc, and PSwc where the spike voltage is sensed? or does it locate during the periods of PSub, PSvb, and PSwb where the induction voltage is sensed? This question can be answered based on the progress after the commutation work. In other words, just after the commutation is turned off, the spike-voltage sensing periods PSuc, PSvc, and PSwc are available, and then the induction-voltage sensing periods PSub, PSvb, and PSwb are available followed by signal producing periods PSua, PSva, PSwa corresponding to supplied voltages Vua, Vva, Vwa. Then the waveform returns to the spike-voltage sensing periods PSuc, PSvc, and PSwc produced by turning off the commutation work. The waveform thus repeats the foregoing cycle.

In step S001 discussed previously, the position sensing is carried out during the periods of PSub, PSvb, and PSwb, and in step S009, the position sensing is carried out during the periods of PSuc, PSvc, and PSwc. In the case of sensing the end of the spike voltage (arrow mark Y after step S010), the step moves on to step S011 where the spike-voltage measuring timer is read for measuring the time duration of the spike voltages.

Next, in step S012, determine whether or not the spike-voltage periods PSuc, PSvc, and PSwc is greater than the induction-voltage sensing periods PSub, PSvb, and PSwb based on the intervals, obtained in step S003, between each of the position senses, and the time duration, obtained in step S011, of the spike voltages.

For instance, the determination of greater or smaller about the periods of the spike voltages can be done this way: comparing a predetermined time with the time difference (hereinafter referred to as a determined time) between the intervals between each of position senses every 60 degree done just before and the total time of a commutation time after the position is sensed until the commutation is turned off plus the time duration of the spike voltages. The predetermined time corresponds to, e.g. 3.75 degree in electric angles.

When the determined time is not longer than the predetermined time (arrow mark Y after step S012), in other words, when the end timing of spike-voltage sensing period PSuc, PSvc, and PSwc of the position sensing signals approaches the cross point with the virtual neutral-point-voltage VN during the induction-voltage sensing periods PSub, PSvb, and PSwb, i.e. the time duration of the spike voltages becomes greater, the step moves on to step S013.

In step S013, when the conduction angle is greater than a lower limit (arrow mark Y after step S013), the conduction angle is reduced by a predetermined angle in step S014. For instance, when conduction angle is set at 150 degree, the lower limit of the conduction angle is set at 120 degree, and angle to be changed is set at 7.5 degree, the conduction angle is changed from 150 degree to 142.5 degree. When the determining condition is kept as it is still after the foregoing change is carried out, the conduction angle is decreased from 142.5 degree to 135 degree, then to 127.5 degree and then to 120 degree.

When the conduction angle already reaches the lower limit in step S013 (arrow mark Y after step S013), or when the conduction angle is reduced in step S014, then the step moves on to step S015.

In step S015, when the determined time is not longer than the predetermined time or takes a negative value (arrow mark Y after step S115), in other words, when the end of the time duration of the spike voltages passes over the time duration of sensing the position at intervals of 60 degree, the commutation timing is reset in step S016.

As discussed previously, when the time duration of the spike voltages passes over an occurrence timing of the cross point between the induction voltage and voltage VN at virtual neutral point, it is impossible to carry out a normal position sensing. In such a case, a tentative point for position sensing is set after an angle of 60 degree passes from the last position sensing done immediately before, and then the commutation timing is set based on this tentative point.

For instance, in the case of work mode A shown in Fig. 2, in other words, i.e. in the case of sensing the rising of the terminal voltage of phase U, a position is tentatively sensed based on the position sensing information obtained in work mode F immediately before, i.e. the information obtained during the sensing of the falling of the terminal voltage of phase V. In a similar way, a tentative position sensing is carried out for the other work modes based on the position sensing information obtained during other phases carried out just before. In this instance, a position sensing is done based on another phase immediately before; however, it can be done based on the position sensing information done several times before where the determined time takes a positive value.

After the commutation timing is reset in step S016, the step returns to step S005, and then repeats the same steps thereafter. When the determined time takes a positive value in step S015 (arrow mark N after step S015), the step returns to step S001, and then repeats the same steps therefrom.

On the other hand, when the determined time takes a greater time than the predetermined one (arrow mark N after step S012), the step moves on to step S017. Contrary to the foregoing determination, when the comparison between the determined time and a predetermined time, e.g. the time corresponding to 7.5 degree in electric angles, results in the greater determined time (arrow mark Y after step S017), in other words, when the end timing of spike-voltage sensing periods PSuc, PSvc, and PSwc of position sensing signals becomes away from the cross point between voltage VN at the virtual neutral point and the induction voltages, i.e. when the time duration of the spike voltages become smaller, the step moves on to step S018.

In step S018, when the conduction angle is smaller than the upper limit (arrow mark N after step S018), the conduction angle is increased by a predetermined angle. Similarly to the previous case, when the conduction angle is set at 120 degree, the upper limit of the conduction angle is set at 150 degree, and the predetermined change angle is set at 7.5 degree, then the conduction angle is changed from 120 degree to 127.5 degree. If the determination condition is still kept as it is, the conduction angle is increased from 127.5 degree to 135 degree, then to 142.5 degree, and then to 150 degree.

In step S018, when the conduction angle reaches the upper limit already (arrow mark Y after step S018), or when the conduction angle is increased in step S019, the step returns to step S001, and repeats the same steps therefrom.

If the determination conditions both in step S012 and step S017 are not satisfied (arrow marks N after steps S012 and S017), the step returns straight to step S001, and repeat the same steps therefrom.

This embodiment thus proves that when a change in load torque invites a change in the motor current, and thereby widening a spike voltage width, the conduction angle is instantaneously decreased for reducing the motor current. As a result, the position sensible range, i.e. induction-voltage sensing periods PSub, PSvb, and PSwb, can be increased. On top of that, the width of the spike voltage, i.e. the spike-voltage sensing periods PSuc, PSvc, and PSwc, can be reduced.

Further, when there is a possibility of an erroneous position sensing due to adverse influence of the spike voltage, the change in the conduction angle allows continuing the work of the motor through a tentative position sensing until a normal position sensing is restored.

The embodiment of the present invention thus allows preventing the motor from falling into out-of-sync, which leads the motor to halt its work, due to failing in sensing the position or an erroneous position sensing due to external factors such as a change in load or a change in voltage. Use of inverter controller 200 in a compressor allows the compressor to work excellently, which assures that a home appliance including such as a refrigerator equipped with inverter controller 200 works also excellently as a system.

### Mode for the Invention 2

Fig. 4 shows a block diagram of an inverter controller in accordance with the second embodiment of the present invention. Fig. 5 shows signal waveforms of respective sections of the inverter controller shown in Fig. 4. Fig. 6 shows a flowchart illustrating the work done by the inverter controller shown in Fig. 4.

In Fig. 4, inverter controller 200 connects to commercial power source 201 and a compressor (not shown), and includes rectifier 202 and inverter circuit 204. Rectifier 202 converts commercial power source 201 into a DC power souce, and inverter circuit 204 drives brushless DC motor 203 of the compressor. Inverter controller 200 further includes driving circuit 205 that drives inverter circuit 204, position sensing circuit 206 that senses a terminal voltage of motor 203, and microprocessor 207 that controls inverter circuit 204.

Microprocessor 207 includes position sensing determiner 209 that senses a magnetic pole position of motor 203 based on an output signal from position sensing circuit 206, position sense waiting section 208 that determines a start of sampling of sensing magnetic pole position, conduction angle controller 210 that determines a conduction angle, and commutation controller 211 that produces a commutation signal.

Microprocessor 207 further includes rpm sensor 212 that calculates an rpm based on an output from position sensing determiner 209, duty setting section 213 that provides a commutation signal with PWM modulation in response to the rpm, carrier output section 214, and PWM controller 215. Microprocessor 207 also includes drive controller 216 that drives driving circuit 205 by using the outputs from commutation controller 211 and PWM controller 215.

Brushless DC motor 203 has six poles with concentrated salient windings, so that it is formed of stator 203s having three-phase windings and rotor 203r. Stator 203s has six poles and nine slots, and stator windings 203u, 203v, 203w of the respective phases and the windings have 189 turns each. Rotor 203r includes permanent magnets 203a, 203b, 203c, 203d, 203e, and 203f therein so that they can produce reluctance torque, namely, rotor 203r is an interior magnet type.

Inverter circuit 204 is formed of six switching transistors Tru, Trx, Trv, Try, Trw, Trz bridged in three-phase, and reflux diodes Du, Dx, Dv, Dy, Dw, Dz connected to the respective transistors in parallel.

Position sensing circuit 206 is formed of a comparator (not shown) and so on, and the comparator compares a terminal voltage signal based on an induction voltage of motor 203 with a reference voltage, thereby obtaining a position sensing signal.

Position sense waiting section 208 sets a wait time for neglecting a spike voltage signal in order to extract only a position sensing signal. The extraction is done by separating the spike voltage signals from the signals supplied from position sensing circuit 206. Position sensing determiner 209 obtains a position signal of rotor 203r from the output signals supplied from position sensing circuit 206, thereby producing a position sensing signal. Conduction angle reduction number determiner 209a determines whether or not a time difference between a position sensing interval used in determiner 209 and the wait time set in waiting section 208 is shorter than a reference time. Conduction angle controller 210 controls a conduction angle in commutation controller 211 based on the position sensing information obtained in position sensing determiner 209. Conduction angle updating timer 210a sets an updating cycle of the conduction angle for controller 210 to update the conduction angle.

Commutation controller 211 calculates a commutation timing based on the position signal supplied from position sensing determiner 209 and the conduction angle supplied from conduction angle controller 210, thereby producing commutation signals for the switching transistors Tru, Trx, Trv, Try, Trw, and Trz.

Rpm sensor 212 counts the position signals supplied by position sensing determiner 209 for a given period, and measures intervals between pulses, thereby calculating an rpm of motor 203.

Duty setting section 213 carries out an addition or a subtraction of duties by using a difference between the rpm calculated by rpm sensor 212 and an rpm instructed by an rpm instruction, thereby outputting the duty value to PWM controller 215. When an actual rpm is smaller than the instructed one, duty setting section 213 increases the duty, and when the actual rpm is greater than the instructed one, it decreases the duty. Carrier output section 214 sets a carrier frequency that switches the switching transistors Tru, Trx, Trv, Try, Trw, Trz within a range between 3kHz and 10kHz. PWM controller 215 outputs a PWM modulated signal by using the carrier frequency set by carrier output section 214 and the duty value set by duty setting section 213. Drive controller 216 synthesizes a commutation signal, PWM modulated signal, conduction angle, and phase advancing angle together for producing a driving signal that is supposed to turn on or off the switching transistors Tru, Trx, Trv, Try, Trw, Trz, thereby outputting the driving signal to driving circuit 205. Based on this driving signal, driving circuit 205 turns on or off the switching transistors Tru, Trx, Trv, Try, Trw, Trz, i.e. carrying out the switching of the transistors, thereby driving brushless DC motor 203.

The waveforms shown in Fig. 5 of respective sections of the inverter controller are described hereinafter. Inverter controller 200 controls brushless DC motor 203 with conduction angle 150 degree and phase advancing angle 15 degree.

Signals (A) - (C) represent terminal voltages Vu, Vv, Vw of phases U, V, W of motor 203, and change with each of phases shifted by 120 degree from one another. These terminal voltages show waveforms synthesized of the following voltages: voltages Vus, Vva, Vwa supplied from inverter circuit 204, induction voltages Vub, Vvb, Vwb produced on the stator windings 203u, 203v, 203w, and pulse-like spike voltages Vuc, Vvc, Vwc produced when any one of reflux diodes Du, Dx, Dv, Dy, Dw, Dz becomes conductive.

The comparators compare respective terminal voltages Vu, Vv, Vw with voltage VN at a virtual neutral point, i.e. a half voltage of the DC power supply voltage and supplied from rectifier 202 to inverter circuit 204, then the comparators output signals Psu, PSv, PSw represented by signals (D) - (F). These output signals are synthesized of Psua, Psva, Pswa corresponding to supply voltages Vua, Vva, Vwa, and Psuc, PSvc, PSwc corresponding to spike voltages Vuc, Vvc, Vwc, and Psub, PSvb, PSwb corresponding to respective periods in which induction voltages Vub, Vvb, Vwb are compared with voltage VN at the virtual neutral point.

The pulse-like spike voltages Vuc, Vvc, Vwc are neglected by a wait time (signal G) set by position sense waiting section 208, similar to the wait timer disclosed in Patent Document 2. Signals PSu, PSv, PSw supplied from the comparators thus resultantly indicate a status of induction voltages Vub, Vvb, Vwb such as positive, negative and phase.

Microprocessor 207 recognizes six modes A - F indicated by signal (H) based on the statuses of signals Psu, PSv, PSw supplied by the respective comparators. Microprocessor 207 outputs driving signals Dsu - Dsz, i.e. signals (I) - (N). In other words, the time durations of respective modes A - F indicated by signal (H) represent intervals between the occurrences of status changes in the position sensing signal recognized by microprocessor 207, i.e. the intervals between each of the position senses (signal O). The work of the inverter controller is detailed hereinafter with reference to the flowchart shown in Fig. 6. Position sense waiting section 208 starts working after step S 103 until step S202 in Fig. 6. Position sensing determiner 209 starts working after step S202 until step S306. Conduction angle reduction number determiner 209a starts working from step S401 and onward.

Firstly in step S101, start counting the timer, and in step S102, wait until the commutation time is passed (arrow mark N after step S102), then in step S103, supply the driving signals Dsu, DSv, DSw, DSx, Dsy, DSz to driving circuit 205, thereby carrying out the commutation.

The work of position sense waiting section 208 is demonstrated hereinafter. During the commutation work, any one of switching transistors Tru, Trx, Trv, Try, Trw, Trz of inverter circuit 204 is switched from the on status to the off status. Immediately after this switching, the energy stored in stator windings 203u, 203v, 203w, which have been conductive just before the switching, is discharged due to a conduction of any one of reflux diodes Du, Dx, Dv, Dy, Dw, Dz. During this period, i.e. between the switching and the discharging, pulse-like spike voltages Vuc, Vvc, Vwc occur.

After neglecting these spike voltages Vuc, Vvc, Vwc, a position sensing is carried out at the cross point where induction voltages Vub, Vvb, Vwb pass through voltage VN at the virtual neutral point. In other words, in step S201, wait until the wait time is passed (arrow mark N after step S201), and then in step S202, start sensing a position, namely, halt the position sensing work in position sense waiting section 208 until the wait time is passed, and neglect spike voltages Vuc, Vvc, Vwc, then start the position sensing work.

Next, the work of position sensing determiner 209 is demonstrated. In step S301, sense the status of signals PSu, PSv, PSw supplied from position sensing circuit 206, and in step S302, determine a position sensing based on the output status of switching transistors Tru, Trx, Trv, Try, Trw, Trz, i.e. based on the status of output signals PSu, PSv, PSw in response to the work modes shown in Fig. 5.

For instance, in the case of work mode A shown in Fig. 5, signal Psu senses H-level, signal PSv senses L-level, and signal PSw senses H-level, thereby sensing a rising of the terminal voltage of phase U. In a similar way, in the cases of the other work modes, the status sensing of signals PSu, PSv, PSw allows sensing the rising or falling of the respective terminal voltages with respect to voltage VN at the virtual neutral point.

In step S302, the determination of position sensing moves the step (arrow mark Y after step S302) on to step S303, where the timer is read for measuring the time duration from the previous position sensing. The position sensing carried out by sensing the rising and falling of respective terminal voltages occurs six times in one cycle of the terminal voltage, so that the measuring the intervals between each of position senses allows obtaining a time duration corresponding to 60 degree in electric angles. Regularly spike voltages Vuc, Vvc, Vwc should end before the cross point where each of induction voltages Vub, Vvb, Vwb passes voltage VN at the virtual neutral point. However, these spike voltages Vuc, Vvc, Vwc are changed their occurrence times by the inductance of stator windings 203u, 203v, 203w and the current available just before the transistors are turned off. If the time duration of spike voltages Vuc, Vvc, Vwc becomes longer due to these changes, the induction voltages Vub, Vvb, Vwb are concealed, so that the time duration exceeding an occurrence timing of the cross point will make it impossible to carry out a normal position sensing.

To overcome this problem, this second embodiment determines a variation in the cross point this way: Measure a time difference between the position sensing start time after the wait time, which has been set in response to the intervals between each of past position-senses, and an occurrence of an actual position sensing signal.

In step S304, calculate a time difference between a timer counting value, i.e. intervals between each of position sensing done at intervals of 60 degree and the wait time set in step S201. This time difference is referred to as a determined time.

To be more specific, in position sensing determiner 209, calculate the time difference between the intervals between each of position sensing done in determiner 209 and the wait time set in position sense waiting section 208. When the time difference is greater than a predetermined reference time, i.e. set-reduction time, it is determined that there still remains some time allowance from the end timing of the spike voltage until the occurrence timing of the cross point between the induction voltage and the virtual neutral point voltage. To the contrary, when a smaller time difference is found, it is determined that there is a shortage of the time allowance. If numbers of the smaller time differences are found, the conduction angle of inverter circuit 204 is reduced at conduction angle reduction number determiner 209a placed next to determiner 209. Then in step S305, set a commutation time and a wait time in response to the interval between each of the position sensing for the next work.

For instance, Fig. 5 shows the work at conduction angle 150 degree and phase advancing angle 15 degree. The reference commutation timing is 60 degree resulting from the interval between each of the position sensing, and an on-timing of driving signals Dsu, DSv, DSw, DSx, Dsy, DSz is 0 degree after the position is sensed, and an off-timing thereof is 30 degree after the position is sensed. The wait time until the start of the next position sensing is 45 degree after the position is sensed.

Then in step S306, count the number of position sensing determinations, i.e. every time the step passes through step S306, the position sensing determination counts one (+1). The work in conduction angle reduction number determiner 209a is demonstrated hereinafter. In determiner 209a, based on the determined time obtained in step S304, determine whether or not spike-voltage sensing periods PSuc, PSvc, and PSwc are greater than induction-voltage sensing periods PSub, PSvb, and PSwb.

In step S401, when the determined time obtained in step S304 is not greater than a predetermined reference time, i.e. set-reduction time (arrow mark Y after step S401), the step moves on to step S402. For instance, when the determined time becomes not greater than a time corresponding to 3.75 degree in electric angles, i.e. when the cross point between virtual neutral-point voltage VN and induction-voltage sensing periods PSub, PSvb, and PSwb approaches the start timing of the position sensing after the wait time passes, the step moves on to step S402, where count one (+1) is done every time when an angle reduction is determined for counting the number of the determinations. To be more specific, every time step S402 is passed through, agnle reduction determination counts +1.

When the determined time is not smaller than the set-reduction time (arrow mark N after step S401), the step moves on to step S403.

In step S403, when the number of position sensing determinations counted in step S306 exceeds a predetermined number of sensing (arrow mark Y after step S403), compare the number of determination of angle reductions set in step S402 with a predetermined number of angle reductions, and then the step moves on to the next one for determining whether or not the conduction angle should be reduced.

To be more specific, in step S403, when the number of determination of angle reductions exceeds the predetermined number of sensing (arrow mark Y after step S403), e.g. the number of determinations 18 corresponding to 3 rotations in electric angles, the step moves on to step S404, where the number of determinations is cleared and reset, then moves on to step S405. When the numbers of determinations is smaller than the predetermined one (arrow mark N), the step moves on to step S501.

In step S405, when the number of angle reduction determinations is not smaller than the predetermined number (arrow mark Y after step S405), e.g. when the number is 6 or greater than 6, a request for an angle reduction is set in step S406, and then the step moves on to step S408. In the foregoing case, when the angle reduction determination occurs 6 times or more than 6 times among 18 times of position sensing, the angle reduction request is set.

In step S405, on the other hand, when the number of angle reduction determinations is smaller than the predetermined one (arrow mark N), the angle reduction request is cancelled in step S407, then the step moves on to step S408, where the number of angle reduction determinations is cleared, and then the step moves on to step S501.

In step S501, determine an updating cycle of the conduction angle. When the updating cycle is passed (arrow mark Y after step S501), the step moves on to step S502, and when the conduction angle stays within the updating cycle (arrow mark N), the step returns to step S101 and repeats the same steps thereafter.

In step S502, when the angle reduction request is available (arrow mark Y), the step moves on to step S503. In other cases in step S502 (arrow mark N), the step returns to step S101 and repeats the same steps thereafter.

In step S503, when the conduction angle is greater than the lower limit 120 degree (arrow mark N after step S503), the conduction angle is changed by a predetermined angle. For instance, when conduction angle is set at 150 degree, the lower limit of the conduction angle is set at 120 degree, and angle to be changed is set at 7.5 degree, the conduction angle is changed from 150 degree to 142.5 degree. When the angle reduction request is still available after this reduction, the conduction angle is reduced from 142.5 degree to 135 degree, then to 127.5 degree and then to 120 degree.

When the conduction angle already reaches the lower limit in step S503 (arrow mark Y after step S503), or when the conduction angle is reduced in step S504, then the step returns to step S101 and repeat the same steps thereafter.

As discussed above, in conduction-angle reduction number determiner 209a, count the number of angle reduction determinations when the time difference between the intervals between each of position sensing done in position sensing determiner 209 and the wait time set in position sense waiting section 208 is smaller than the predetermined reference time, i.e. set-reduction time. If the number of angle reduction determinations among the predetermined number of position sensing exceeds the predetermined number, it is determined that there is a greater number of shortages of the time allowance from the end timing of the spike voltage until the occurrence timing of the cross point between the induction voltage and the virtual neutral-point voltage. As a result, the conduction angle in inverter circuit 204 is reduced within a range not smaller than 120 degree in electric angles.

Inverter circuit 204, which drives brushless DC motor 203, carries out a wide-angle control for enlarging the conduction angle over 120 degree as a min. angle in electric angles, so that circuit 204 can reduce the conduction angle within a range over 120 degree.

If a spike voltage width is increased because of a change in the motor current caused by a change in load torque, a reduction in the conduction angle allows reducing the motor current. As a result, the position sensible range, i.e. induction-voltage sensing periods PSub, PSvb, and PSwb, can be increased. At the same time, the spike voltage width, i.e. spike-voltage sensing periods PSuc, PSvc, and PSwc, can be reduced. This mechanism allows preventing the motor from falling into out-of-sync or stopping the work due to a failure in sensing the position or an erroneous sensing caused by an external factor such as a load change or a voltage change.

When the load torque changes greatly, which changes the interval between each of position sensing during one rotation of rotor 203r, it can be determined that the time duration of the spike voltage should be increased. This mechanism also allows preventing the motor from falling into out-of-sync or stopping the work due to a failure in sensing the position or an erroneous sensing caused by an external factor such as a load change or a voltage change.

Placement of permanent magnets 203a, 203b, 203c, 203d, 203e, and 203f in rotor 203r allows making full use of the reluctance torque. If the phase advancing angle control, which narrows the position sensible range, is carried out, this structure allows preventing the motor from falling into out-of-sync or stopping the work due to a failure in sensing the position or an erroneous sensing caused by an external factor such as a load change or a voltage change.

If the motor has a greater inductance and thus tends to narrow the position sensible range, use of stator windings 203u, 203v, 203w with a greater number of turns, e.g. 160 turns or greater than 160 turns, allows also preventing the motor from falling into out-of-sync or stopping the work due to a failure in sensing the position or an erroneous sensing caused by an external factor such as a load change or a voltage change.

If the motor tends to narrow the position sensible range caused by a smaller mechanical angle due to an increment in the number of poles, use of six poles or more than six poles (four poles are conventionally used) in brushless DC motor 203 allows preventing the motor from falling into out-of-sync or stopping the work due to a failure in sensing the position or an erroneous sensing caused by an external factor such as a load change or a voltage change.

Use of inverter controller 200 in compressor 220 allows compressor 220 to work excellently, which assures that a home appliance, including such as a refrigerator, equipped with inverter controller 200 works also excellently as a system.

In this second embodiment, the conduction angle is reduced from 150 degree to 120 degree step by step in 7.5 degree each; however, the change angle 7.5 degree can be smaller for the conduction angle to change more linearly, or the change angle can be greater than 7.5 degree to the contrary.

In this embodiment, the number of position sensing and the number of angle reductions are set 18 times and 6 times respectively; however, the embodiment obtains a similar result to what is discussed above although these numbers are changed appropriately.

In this embodiment, firstly, the time difference between the interval between each of position sensing done in the position sensing determiner and the wait time set in the position sense waiting section is sensed shorter than the predetermined reference time. Then when the number of angle reduction determinations among the predetermined number of position sensing determinations is greater than the predetermined number of reductions, the conduction angle in the inverter circuit is reduced in the range over 120 degree in electric angles. However, the inverter controller, which can sense that the foregoing time difference is shorter than the predetermined reference time, and then can reduce the conduction angle within the range over 120 degree in electric angles, allows carrying out this second embodiment regardless of the contents of the control steps after the sensing of the time difference shorter than the reference time.

In this second embodiment, the reference time (set-reduction time), which is used for comparing the intervals between each of position sensing with the wait time, is a time corresponding to 3.75 degree in electric angles. However, the reference time can be changed appropriately such that the time allowance can be determined appropriately, where the time allowance is available from the end timing of the spike voltages until the occurrence timing of the cross point between the induction voltage and the virtual neutral-point voltage.

### Mode for the Invention 3

Fig. 7 shows a block diagram of an inverter controller in accordance with the third embodiment of the present invention. Fig. 8 shows signal waveforms of respective sections of the inverter controller shown in Fig. 7. Fig. 9 shows a flowchart illustrating the work done by the inverter controller shown in Fig. 7.

In Fig. 7, inverter controller 200 connects to commercial power source 201 and a compressor (not shown), and includes rectifier 202 and inverter circuit 204. Rectifier 202 converts commercial power source 201 into a DC power source, and inverter circuit 204 drives brushless DC motor 203 of the compressor. Inverter controller 200 further includes driving circuit 205 that drives inverter circuit 204, position sensing circuit 206 that senses a terminal voltage of motor 203, and microprocessor 207 that controls inverter circuit 204.

Microprocessor 207 includes position sensing determiner 209 that senses a magnetic pole position of motor 203 based on an output signal from position sensing circuit 206, position sense waiting section 208 that determines a start of sampling of sensing the magnetic pole position, conduction angle controller 210 that determines a conduction angle, and commutation controller 211 that produces a commutation signal.

Microprocessor 207 further includes rpm sensor 212 that calculates an rpm based on an output from position sensing determiner 209, duty setting section 213 that provides a commutation signal with PWM modulation in response to the rpm, carrier output section 214, and PWM controller 215. Microprocessor 207 also includes drive controller 216 that drives driving circuit 205 by using the outputs from commutation controller 211 and PWM controller 215.

Brushless DC motor 203 has six poles with concentrated salient windings, so that it is formed of stator 203s having three-phase windings and rotor 203r. Stator 203s has six poles and nine slots, and stator windings, i.e. 203u, 203v, 203w having 189 turns each, of the respective phases. Rotor 203r includes permanent magnets 203a, 203b, 203c, 203d, 203e, and 203f therein so that they can produce reluctance torque, namely, rotor 203r is an interior magnet type.

Inverter circuit 204 is formed of six switching transistors Tru, Trx, Trv, Try, Trw, Trz bridged in three-phase, and reflux diodes Du, Dx, Dv, Dy, Dw, Dz connected to the respective transistors in parallel.

Position sensing circuit 206 is formed of a comparator (not shown) and so on, and the comparator compares a terminal voltage signal based on an induction voltage of motor 203 with a reference voltage, thereby obtaining a position sensing signal.

Position sense waiting section 208 sets a wait time for neglecting spike voltage signals in order to extract only a position sensing signal. The extraction is done by separating the spike voltage signals from the output signals supplied from position sensing circuit 206.

Position sensing determiner 209 obtains a position signal of rotor 203r from the output signals supplied from position sensing circuit 206, thereby producing a position sensing signal. Conduction angle increase number determiner 209b determines whether or not a time difference between a position sensing interval in determiner 209 and the wait time in waiting section 208 is longer than a reference time.

Conduction angle controller 210 controls a conduction angle in commutation controller 211 based on the position sensing information obtained in position sensing determiner 209. Conduction angle updating timer 210a sets an updating cycle of the conduction angle for controller 210 to update the conduction angle.

Commutation controller 211 calculates a commutation timing based on the position signal supplied from position sensing determiner 209 and the conduction angle supplied from conduction angle controller 210, thereby producing commutation signals for switching transistors Tru, Trx, Trv, Try, Trw, Trz.

Rpm sensor 212 counts the position signals supplied by position sensing determiner 209 for a given period, and measures intervals between pulses, thereby calculating an rpm of motor 203.

Duty setting section 213 carries out an addition or a subtraction of duties by using a difference between the rpm calculated by rpm sensor 212 and an rpm instructed by an rpm instruction, thereby outputting the duty value to PWM controller 215. When an actual rpm is smaller than the instructed one, duty setting section 213 increases the duty, and when the actual rpm is greater than the instructed one, it decreases the duty. Carrier output section 214 sets a carrier frequency that switches switching transistors Tru, Trx, Trv, Try, Trw, Trz within a range between 3kHz and 10kHz.

PWM controller 215 outputs a PWM modulated signal by using the carrier frequency set by carrier output section 214 and the duty value set by duty setting section 213. Drive controller 216 synthesizes a commutation signal, PWM modulated signal, conduction angle, and phase advancing angle together for producing a driving signal that is supposed to turn on or off the switching transistors Tru, Trx, Trv, Try, Trw, Trz, thereby outputting the driving signal to driving circuit 205. Based on this driving signal, driving circuit 205 turns on or off the switching transistors Tru, Trx, Trv, Try, Trw, Trz, i.e. carrying out the switching of the transistors, thereby driving brushless DC motor 203.

Next, the waveforms shown in Fig. 8 are detailed hereinafter. Inverter controller 200 controls brushless DC motor 203 with conduction angle 150 degree and phase advancing angle 15 degree.

Signals (A) - (C) represent terminal voltages Vu, Vv, Vw of phases U, V, W of motor 203, and vary while each of phases shifts by 120 degree from one another. These terminal voltages show waveforms synthesized of the following voltages: voltages Vus, Vva, Vwa supplied from inverter circuit 204, induction voltages Vub, Vvb, Vwb produced on the stator windings 203u, 203v, 203w, and pulse-like spike voltages Vuc, Vvc, Vwc produced when any one of reflux diodes Du, Dx, Dv, Dy, Dw, Dz becomes conductive.

The comparators compare respective terminal voltages Vu, Vv, Vw with voltage VN at a virtual neutral point, i.e. a half voltage of the DC power supply voltage and supplied from rectifier 202 to inverter circuit 204, then the comparators output signals Psu, PSv, PSw represented by signals (D) - (F). These output signals are synthesized of Psua, Psva, Pswa corresponding to supply voltages Vua, Vva, Vwa, and Psuc, PSvc, PSwc corresponding to spike voltages Vuc, Vvc, Vwc, and Psub, PSvb, PSwb corresponding to respective periods in which induction voltages Vub, Vvb, Vwb are compared with voltage VN at the virtual neutral point.

The pulse-like spike voltages Vuc, Vvc, Vwc are neglected by a wait time (signal G) set by position sense waiting section 208, similar to the wait timer disclosed in Patent Document 2. Signals PSu, PSv, PSw supplied from the comparators thus resultantly indicate a status of induction voltages Vub, Vvb, Vwb such as positive, negative and phase.

Microprocessor 207 recognizes six modes A - F indicated by signal (H) based on the statuses of signals Psu, PSv, PSw supplied by the respective comparators. Microprocessor 207 outputs driving signals Dsu - Dsz, i.e. signals (I) - (N). In other words, the time durations of respective modes A - F indicated by signal (H) represent intervals between the occurrences of status changes in the position sensing signal recognized by microprocessor 207, i.e. the intervals between the senses of positions (signal O).

The work of the inverter controller is detailed hereinafter with reference to the flowchart shown in Fig. 9. Position sense waiting section 208 starts working after step S 103 until step S202 in Fig. 9. Position sensing determiner 209 starts working after step S202 until step S306. Conduction angle increase number determiner 209b starts working from step S601 and onward.

First in step S101, start counting the timer, and in step S102, wait until the commutation time is passed, and when the commutation time becomes greater than the timer value, determine that the commutation time is passed (arrow mark N after step S102), and the step moves on to step S103. In step S103, supply driving signals Dsu, DSv, DSw, DSx, Dsy, DSz to driving circuit 205, thereby carrying out the commutation work.

The work of position sense waiting section 208 is demonstrated hereinafter. During the commutation work, any one of switching transistors Tru, Trx, Trv, Try, Trw, Trz of inverter circuit 204 is switched from on status to off status. Immediately after this switching, the energy stored in stator windings 203u, 203v, 203w, which have been conductive just before the switching, is discharged due to a conduction of any one of reflux diodes Du, Dx, Dv, Dy, Dw, Dz. During this period, i.e. between the switching and the discharging, pulse-like spike voltages Vuc, Vvc, Vwc occur.

After neglecting these spike voltages Vuc, Vvc, Vwc, a position sensing is carried out at the cross point where induction voltages Vub, Vvb, Vwb pass through voltage VN at the virtual neutral point. In other words, in step S201, wait until the wait time is passed (arrow mark N after step S201), and then in step S202, start sensing a position, namely, halt the position sensing work in position sense waiting section 208 until the wait time is passed for neglecting spike voltages Vuc, Vvc, Vwc, then start the position sensing work.

Next, the work of position sensing determiner 209 is demonstrated. In step S301, sense the status of signals PSu, PSv, PSw supplied from position sensing circuit 206, and in step S302, determine a position sensing based on the output status of switching transistors Tru, Trx, Trv, Try, Trw, Trz, i.e. based on the status of output signals PSu, PSv, PSw in response to the work modes shown in Fig. 8.

For instance, in the case of work mode A shown in Fig. 8, Psu senses H-level, PSv senses L-level, and PSw senses H-level, thereby sensing a rising of the terminal voltage of phase U. In a similar way, in the cases of the other work modes, the status sensing of signals PSu, PSv, PSw allows sensing the rising or falling of the respective terminal voltages with respect to voltage VN at the virtual neutral point.

In step S302, the determination of position sensing moves the step (arrow mark Y after step S302) on to step S303, where the timer is read for measuring the time duration from the previous position sensing. The position sensing carried out by sensing the rising and falling of respective terminal voltages occurs six times in one cycle of the terminal voltage, so that the measuring the intervals between sensing the positions allows obtaining a time duration corresponding to 60 degree in electric angles. Regularly spike voltages Vuc, Vvc, Vwc should end before the cross point where each of induction voltages Vub, Vvb, Vwb passes virtual neutral-point voltage VN. However, these spike voltages Vuc, Vvc, Vwc are changed their occurrence times by the inductance of stator windings 203u, 203v, 203w and the current available just before the transistors are turned off. If the time duration of spike voltages Vuc, Vvc, Vwc becomes longer, the induction voltages Vub, Vvb, Vwb are concealed, so that the time duration exceeding an occurrence timing of the cross point will make it impossible to carry out a normal position sensing.

To overcome this problem, this second embodiment determines a variation in the cross point this way: Measure a time difference between the position sensing start time after the wait time set in response and the intervals between each of the position sensing done previously until an occurrence of actual position sensing signal.

In step S304, calculate a time difference between a timer counting value, i.e. intervals between each of position sensing done at intervals of 60 degree and the wait time set in step S201. This time difference is referred to as a determined time.

To be more specific, in position sensing determiner 209, calculate the time difference between the intervals between each of position sensing done in determiner 209 and the wait time set in position sense waiting section 208. When a greater time difference is found, it is determined that there still remains some time allowance from the end timing of the spike voltage until the occurrence timing of the cross point between the induction voltage and the virtual neutral- point voltage. To the contrary, when a smaller time difference is found, it is determined that there is a shortage of the time allowance. If numbers of the greater time differences are found, the conduction angle of inverter circuit 204 is increased at conduction angle increase number determiner 209b placed next to determiner 209.

Then in step S305, set a commutation time and a wait time for the next position sensing in response to the interval between each of the position sensing. For instance, Fig. 8 shows the work at conduction angle 150 degree and phase advancing angle 15 degree. The reference commutation timing is 60 degree resulting from the interval between each of the position sensing, and an on-timing of driving signals Dsu, DSv, DSw, DSx, Dsy, DSz is 0 degree after the position is sensed, and an off-timing thereof is 30 degree after the position is sensed. The wait time until the start of the next position sensing is 45 degree after the position is sensed.

Then in step S306, count the number of position sensing determinations, i.e. every time the step passes through step S306, the position sensing determination counts one (+1). The work in conduction angle increase number determiner 209b is demonstrated hereinafter. In determiner 209b, based on the determined time obtained in step S304, determine whether or not spike-voltage sensing periods PSuc, PSvc, and PSwc are greater than induction-voltage sensing periods PSub, PSvb, and PSwb.

Firstly in step S601, when the determined time obtained in step S304 is greater than a predetermined reference time, i.e. set-increase time (arrow mark Y after step S601), the step moves on to step S602. For instance, when the determined time becomes not smaller than a time corresponding to 7.5 degree in electric angles, i.e. when the cross point between virtual neutral-point voltage VN and induction-voltage sensing periods PSub, PSvb, and PSwb is away from the start timing of the position sensing after the wait time passes, the step moves on to step S602, where count one (+1) is done every time when an increase of angle is determined for counting the number of the determinations. In other words, every time step S602 is passed through, the determination of angle-increase counts one (+1).

When the determined time is smaller than the set-increase time in step S601 (arrow mark N after step S601), the step moves on to step S603.

In step S603, when the number of position sensing determinations counted in step S306 exceeds a predetermined number of sensing (arrow mark Y after step S603), compare the number of determinations of angle-increase set in step S602 with a predetermined number of angle-increase, and then the step moves on to the next one for determining whether or not the conduction angle should be increased.

To be more specific, in step S603, when the number of determinations of angle-increase exceeds the predetermined number of sensing (arrow mark Y after step S603), e.g. the number of determinations of 18 corresponding to 3 rotations in electric angles, the step moves on to step S604, where the number of determinations is cleared, then moves on to step S605. When the numbers of determinations is smaller than the predetermined one in step S603 (arrow mark N after step S603), the step moves on to step S701.

In step S605, when the number of angle increase determinations is not smaller than the predetermined number (arrow mark Y after step S605), e.g. when the number is 18 or greater than 18, a request for an angle-increase is set in step S606, and then the step moves on to step S608. In the foregoing case, when the angle increase determination occurs 18 times consecutively during the same number of position sensing, the angle-increase is requested.

In step S605, on the other hand, when the number of angle increase determinations is smaller than the predetermined one (arrow mark N), the angle increase request is cleared in step S607, then the step moves on to step S608, where the number of determinations of angle-increase is cleared, and then the step moves on to step S701. In step S701, determine an updating cycle of the conduction angle. When the updating cycle is passed (arrow mark Y after step S701), the step moves on to step S702, and when the conduction angle stays within the updating cycle (arrow mark N), the step returns to step S101 and repeats the same steps thereafter.

In step S702, when the angle-increase is requested (arrow mark Y), the step moves on to step S703. When the request is not available in step S702 (arrow mark N), the step returns to step S101 and repeats the same steps thereafter.

In step S703, when the conduction angle is smaller than the upper limit (arrow mark N after step S703), e.g. smaller than 150 degree, the conduction angle is changed by a predetermined angle. For instance, when conduction angle is set at 120 degree, the upper limit of the conduction angle is set at 150 degree, and angle to be changed is set at 7.5 degree, the conduction angle is changed from 120 degree to 127.5 degree. When the angle-increase request is still available after this increase, the conduction angle is increased from 127.5 degree to 135 degree, then to 142.5 degree and then to 150 degree.

When the conduction angle already reaches the upper limit, i.e. 150 degree in step S703 (arrow mark Y after step S703), or when the conduction angle is increased in step S704, then the step returns to step S101 and repeats the same steps thereafter.

As discussed above, in conduction-angle increase number determiner 209b, count the number of angle increase determinations when the time difference between the intervals between each of position sensing done in position sensing determiner 209 and the wait time set in position sense waiting section 208 is greater than the predetermined reference time, i.e. set-increase time. If the number of angle-increase determinations counted among the predetermined number of position sensing exceeds the predetermined number of angle-increase, it is determined that there remains still a greater number of time allowance from the end timing of the spike voltage until the occurrence timing of the cross point between the induction voltage and the virtual neutral-point voltage. As a result, the conduction angle in inverter circuit 204 is increased within a range smaller than 180 degree in electric angles.

Inverter circuit 204, which drives brushless DC motor 203, carries out a wide-angle control for enlarging the conduction angle over 120 degree in electric angles, so that circuit 204 can increase the conduction angle within a range smaller than the max. angle of 180 degree.

If the time duration of the spike voltages is increased, and the conduction angle decreases, which then resultantly reduces the time duration of the spike voltages, the foregoing structure allows restoring the conduction angle, so that the motor can work at a high rpm and produce high torque again.

When a great change in load torque occurs, which changes the interval between each of the position sensing during one rotation of rotor 203r, the foregoing structure allows determining that the time duration of the spike voltages should be reduced. As a result, the conduction angle can be restored, so that the motor can work at a high rpm and produce high torque again.

Use of inverter controller 200 in compressor 220 allows compressor 220 to work excellently, which assures that a home appliance including such as a refrigerator equipped with inverter controller 200 works also excellently as a system.

In this third embodiment, the conduction angle is reduced from 120 degree to 150 degree step by step in 7.5 degree each; however, the change angle 7.5 degree can be smaller for the conduction angle to change more linearly, or the change angle can be greater than 7.5 degree to the contrary.

In this embodiment, the number of position sensing and the number of angle reductions are both set 18 times; however, if these numbers are changed appropriately, the embodiment can still obtain a similar result to what is discussed above.

In this embodiment, firstly, the time difference between the intervals between each of position sensing done in the position sensing determiner and the wait time set in the position sense waiting section is sensed greater than the predetermined reference time. Then when the number of angle-increase determinations counted among the predetermined number of position sensing determinations exceeds the predetermined number of angle-increase, the conduction angle in the inverter circuit is increased in the range not greater than 150 degree in electric angles. However, the inverter controller, which can sense that the foregoing time difference is greater than the predetermined reference time, and then can increase the conduction angle within the range smaller than 180 degree in electric angles, allows producing a similar advantage to what is discussed above regardless of the content of the control steps after the sensing of the greater time difference.

In this third embodiment, the reference time (set-increase time), which is used for comparing the intervals between each of position sensing with the wait time, is a time corresponding to 7.5 degree in electric angles. However, the reference time can be changed appropriately such that the time allowance from the end timing of the spike voltages until the occurrence timing of the cross point between the induction voltage and the virtual neutral-point voltage can be determined rightly.

### Mode for the Invention 4

Fig. 10 shows a block diagram of an inverter controller in accordance with the fourth embodiment of the present invention, and Fig. 11 shows a flowchart illustrating the work done by the inverter controller shown in Fig. 10.

In Fig. 10, position sensing determiner 209 is equipped with both of conduction angle reduction number determiner 209a used in embodiment 2 and conduction angle increase number determiner 209b used in embodiment 3. The inverter controller in accordance with this fourth embodiment thus can produce both of the advantages described in embodiments 2 and 3.

To be more specific, the second embodiment produces this advantage: If a spike voltage width is increased because of a change in the motor current caused by a change in load torque, a reduction in the conduction angle allows reducing the motor current. As a result, the position sensible range can be increased. At the same time, the spike voltage width can be reduced. This mechanism allows preventing the motor from falling into out-of-sync or stopping the work due to a failure in sensing the position or an erroneous sensing caused by an external factor such as a load change or a voltage change.

On top of that, the third embodiment produces this advantage: If the time duration of the spike voltages is increased, and the conduction angle decreases, which then resultantly reduces the time duration of the spike voltages, the foregoing structure allows restoring the conduction angle, so that the motor can work at a high rpm and produce high torque again.

When a great change in load torque occurs, which changes the interval between each of the position sensing during one rotation of rotor 203r, the foregoing structure allows determining that the time duration of the spike voltages is increased. This mechanism allows preventing the motor from falling into out-of-sync or stopping the work due to a failure in sensing the position or an erroneous sensing caused by an external factor such as a load change or a voltage change.

Placement of permanent magnets 203a, 203b, 203c, 203d, 203e, and 203f in rotor 203r allows making full use of the reluctance torque. If the phase advancing angle control, which narrows the position sensible range, is carried out in order to use the reluctance torque, this structure allows preventing the motor from falling into out-of-sync or stopping the work due to a failure in sensing the position or an erroneous sensing caused by an external factor such as a load change or a voltage change.

If the motor has a greater inductance and thus tends to narrow the position sensible range due to employing stator windings 203u, 203v, 203w with a greater number of turns, e.g. 160 turns or greater than 160 turns, the structure discussed above allows also preventing the motor from falling into out-of-sync or stopping the work due to a failure in sensing the position or an erroneous sensing caused by an external factor such as a load change or a voltage change.

If the brushless DC motor employing six poles or more than six poles (four poles are conventionally used) tends to narrow the position sensible range in mechanical angles due to an increment in the number of poles, the structure discussed above allows preventing the motor from falling into out-of-sync or stopping the work due to a failure in sensing the position or an erroneous sensing caused by an external factor such as a load change or a voltage change.

If the time duration of the spike voltages is increased, and the conduction angle decreases, which then resultantly reduces the time duration of the spike voltages, the foregoing structure allows restoring the conduction angle, so that the motor can work at a high rpm and produce high torque again.

When a great change in load torque occurs, which changes the interval between each of the position sensing during one rotation of rotor 203r, the foregoing structure allows determining that the time duration of the spike voltages is reduced. As a result, the conduction angle can be restored, so that the motor can work at a high rpm and produce high torque again.

Use of inverter controller 200 in compressor 220 allows compressor 220 to work excellently, which assures that a home appliance including such as a refrigerator equipped with inverter controller 200 works also excellently as a system.

For instance as shown by the schematic diagram in Fig 12, refrigerator 300 in accordance with this fourth embodiment includes multiple storage rooms 302 placed in main unit 301, machine room 303 placed in a rear-lower section or a rear-upper section of main unit 301. In machine room 303, compressor 304 having inverter controller 200 demonstrated in embodiments 1 - 4 is placed. Refrigerating cycle elements 306, which are coupled together by pipes 305 and include compressor 304, are placed behind main unit 301.

The refrigerator in accordance with this fourth embodiment is operated by the compressor which is equipped with the inverter controller demonstrated in embodiments 1 - 4, so that the refrigerator can work excellently free from stoppage although a change in load torque or a change in voltage occurs.

The inverter controller of the present invention comprises the following structural elements:
(a) an inverter circuit for driving a brushless DC motor;
(b) a position sensing circuit for sensing an induction voltage of the motor as well as a spike voltage occurring when a commutation is switched in the inverter circuit;
(c) a position sensing determiner for sensing a rotating position and an rpm of a rotor of the motor based on the induction voltage sensed by the position sensing circuit, and outputting a rotating position sensing signal of the rotor;
(d) a spike voltage determiner for measuring a time duration of the spike voltage;
(e) a commutation controller for setting a time between an output of the position sensing signal of the rotor and a start of commutation by the inverter circuit based on the conduction angle of a motor current of the brushless DC motor, a phase advance of the motor current with respect to the induction voltage, and the rpm; and
(f) a conduction angle controller for changing the conduction angle in electric angles of the inverter circuit within a given angle range.

The foregoing structure allows the conduction angle of the inverter circuit to be reduced in a greater range than a lower limit of a given angle range in electric angles at the following case: a time difference between the intervals between each of outputs of the position sensing signals of the rotor and a total time of a time starting from an occurrence of the position sensing signal until the inverter circuit starts the commutation plus the time duration of the spike voltage becomes shorter than a predetermined reference time.

The structure discussed above can instantaneously change a conduction angle in response to an increase in the spike voltage width caused by a change in the motor current due to a change in load torque. As a result, the position sensible range can be increased, and the spike voltage width can be reduced, thereby preventing a motor from falling into out-of-sync and stopping the work caused by failing in position sensing or an erroneous position sensing due to an external factor such as a change in load or in voltage.

When the total time of the time starting from an occurrence of the position sensing signal until the inverter circuit starts the commutation plus the time duration of the spike voltage exceeds the time interval between each of outputs of the position sensing signals of the rotor, the present invention carries out the commutation work based on the position sensing signal of the rotor by using induction voltages of another phase in which the commutation work has been done.

If there is a possibility of an erroneous position sensing due to adverse influence of the spike voltage, the change in the conduction angle thus allows continuing the work of the motor through a tentative position sensing until a normal position sensing is restored. The inverter controller thus can prevent the motor from stopping the work due to motor's falling into out-of-sync caused by an erroneous position sensing or failing in sensing the position due to an external factor such as a change in a load or a voltage.

The present invention also can increase the conduction angle of the inverter circuit in electric angles within a range smaller than the upper limit of the angle when a time difference becomes greater than a predetermined reference time. The time difference is measured between the interval between each of outputs of rotor's position sensing signal and the total time of the time duration of the spike voltage from the occurrence of the position signal until the inverter circuit plus the time before the duration time of the spike voltage ends.

If the time duration of the spike voltages is increased, and the conduction angle decreases, which then resultantly reduces the time duration of the spike voltages, the foregoing mechanism allows restoring the conduction angle, so that the motor can work at a high rpm and produce high torque again.

The inverter controller of the present invention comprises the following structural elements:
(a) an inverter circuit for driving a brushless DC motor;
(b) a position sensing circuit for sensing an induction voltage of the motor;
(c) a position sensing determiner for outputting a position sensing signal of the rotor based on the induction voltage sensed by the position sensing circuit;
(d) a position sense waiting section for setting a wait time before the position sensing determiner starts sensing the induction voltage;
(e) a commutation controller for setting a time between an output of the position sensing signal of the rotor and a start of commutation by the inverter circuit based on the conduction angle of a motor current of the brushless DC motor, a phase advance of the motor current with respect to the induction voltage, and the rpm; and
(f) a conduction angle controller for changing the conduction angle in electric angles of the inverter circuit within a given range.

The foregoing structure allows the conduction angle of the inverter circuit to be reduced within a range greater than a lower limit of a given angle range in electric angles in the following case: a time difference between the intervals between each of the position senses done by the position sensing determiner and the wait time set by the position sense waiting section becomes shorter than a predetermined reference time.

If a spike voltage width is increased because of a change in the motor current caused by a change in load torque, a reduction in the conduction angle allows reducing the motor current. As a result, the position sensible range, i.e. induction-voltage sensing period can be increased. At the same time, the spike voltage width can be reduced. This mechanism allows preventing the motor from falling into out-of-sync or stopping the work due to a failure in sensing the position or an erroneous sensing caused by an external factor such as a load change or a voltage change.

The inverter controller of the present invention is equipped with the conduction angle reduction number determiner which determines whether or not a time difference between the intervals between each of position sensing done in the determiner and the wait time set in the position sense waiting section is shorter than a predetermined reference time. When the number of angle reduction determinations during a predetermined number of position sensing exceeds the predetermined number of angle reductions, the conduction angle of the inverter circuit can be reduced within a range greater than a lower limit of a given angle range.

When a great change in load torque occurs, which changes the intervals between each of the position sensing during one rotation of the rotor, the foregoing structure allows determining that the time duration of the spike voltages should be increased. The mechanism discussed above thus allows preventing the motor from falling into out-of-sync, which leads the motor to halt its work, due to failing in sensing the position or an erroneous position sensing due to external factors such as a change in load or a change in voltage.

The inverter controller of the present invention allows increasing the conduction angle of the inverter circuit in electric angles when the time difference between the intervals between each of position sensing done by the position sensing determiner and the wait time set in the position sense waiting section becomes greater than the predetermined reference time. The conduction angle can be increased within a range smaller than an upper limit of a given angle range.

If the time duration of the spike voltages is increased, and the conduction angle decreases, which then resultantly reduces the time duration of the spike voltages, the foregoing structure allows restoring the conduction angle, so that the motor can work at a high rpm and produce high torque again.

The inverter controller of the present invention includes the conduction angle increase number determiner which counts the number of angle-increase determinations, i.e. the number of time differences between the intervals between each of position sensing done in determiner 209 and the wait time set in waiting section 208 longer than a predetermined reference time. When the counted numbers become greater than a predetermined number, the conduction angle of the inverter circuit in electric angles can be increased within a range smaller than the upper limit of a predetermined angle range. When a great change in load torque occurs, which changes the intervals between each of the position sensing during one rotation of the rotor, the foregoing structure allows determining that the time duration of the spike voltages should be reduced. As a result, the conduction angle can be restored although it has been reduced, so that the motor can work at a high rpm, and produce high torque again.

Since the brushless DC motor is an interior magnet type and has salient poles, the reluctance torque can be fully used by carrying out phase-advancing control, which however narrows the position sensible range. The inverter controller of the present invention produces the advantage discussed previously, so that it allows preventing the motor from falling into out-of-sync, which leads the motor to halt its work, due to failing in sensing the position or an erroneous position sensing due to external factors such as a change in load or a change in voltage.

When a brushless DC motor employs stator windings each of which has 160 turns or greater than 160 turns, the motor has a greater inductance, and the spike voltage width becomes greater, so that the position sensible range becomes narrower. In such a case, the inverter controller of the present invention produces the advantage previously discussed, so that the motor can be prevented from falling into out-of-sync, which leads the motor to halt its work, due to failing in sensing the position or an erroneous position sensing due to external factors such as a change in load or a change in voltage. When a brushless DC motor employs six poles or more than six poles, so that its position sensible range becomes narrower in terms of mechanical angle due to an increment in the number of poles, the inverter controller of the present invention produces the advantages previously discussed. As a result, the motor can be prevented from falling into out-of-sync, which leads the motor to halt its work, due to failing in sensing the position or an erroneous position sensing caused by external factors such as a change in load or a change in voltage.

The present invention is applicable to a compressor employing the inverter controller, so that a reliable compressor, which can be prevented from falling into out-of-phase due to a change in load or voltage, is obtainable.

The present invention is applicable to home appliances employing the inverter controller, so that reliable home appliances such as a reliable refrigerator can be obtained. The home appliances can improve their resistance to a change in load or voltage.

### Industrial Applicability

An inverter controller of the present invention allows sensing, without fail, the position of magnetic poles of a rotor although a change in load or in voltage occurs. The inverter controller can be thus useful for home appliances such as an air-conditioner, refrigerator, washing machine, or for electric vehicles which sometimes encounter a change in load or in voltage.

## Claims

1. An inverter controller comprising:
(a) an inverter circuit (200) for driving a brushless DC motor (203);
(b) a position sensing circuit (206) for sensing an induction voltage of the motor;
(c) a position sensing determiner (209) for outputting a position sensing signal of a rotor (203r) based on the induction voltage sensed by the position sensing circuit;
(d) a position sense waiting section (208) for setting a wait time before the position sensing determiner starts sensing the induction voltage;
(e) a commutation controller (211) for setting a time between an output of the position sensing signal of the rotor and a start of a commutation work to be done by the inverter circuit based on a conduction angle of a motor current of the motor, a phase advancing angle of the motor current with respect to the induction voltage, and a rpm;
(f) a conduction angle controller (210) for changing the conduction angle in electric angles of the inverter circuit within a given angle range, **characterized in that** the conduction angle is reduced when a time difference between intervals of each of position sensing done in the position sensing determiner and a wait time set in the position sense waiting section becomes shorter than a predetermined reference time; and
(g) a conduction angle reduction number determiner (209a) for counting a number of angle reduction determinations which are determined when the time difference between intervals of each of position sensing done in the position sensing determiner and the wait time set in the position sense waiting section becomes shorter than the predetermined reference time, wherein the conduction angle is reduced when a number of angle reduction determinations during a predetermined number of position sensing becomes greater than a predetermined number of angle reductions.

2. The inverter controller of claim 1, wherein the conduction angle of the inverter circuit is increased when the time difference between intervals of each of position sensing done in the position sensing determiner and the wait time set in the position sense waiting section becomes longer than the predetermined reference time.

3. The inverter controller of claim 1 further comprises a conduction angle increase number determiner (209b) for counting a number of angle increase determinations which are determined when the time difference between intervals of each of position sensing done in the position sensing determiner and the wait time set in the position sense waiting section becomes longer than the predetermined reference time, wherein the conduction angle is increased when a number of angle reduction determinations during a predetermined number of position sensing becomes greater than a predetermined number of angle increases.

4. The inverter controller of claim 1, wherein the predetermined angle range is greater than 120 degree and smaller than 180 degree in electric angles.

5. The inverter controller of claim 1, wherein the brushless DC motor includes permanent magnets in the rotor.

6. The inverter controller of claim 1, wherein the brushless DC motor has salient poles.

7. The inverter controller of claim 1, wherein the brushless DC motor includes stator windings having 160 turns or greater than 160 turns each.

8. The inverter controller of claim 1, wherein the brushless DC motor includes six poles or more than six poles.

9. The inverter controller of claim 1, wherein when the total time of the time from an occurrence of the position sensing signal until the start of the commutation work to be done by the inverter circuit plus the time duration of a spike voltage exceeds the intervals between each of outputs of position sensing signals of the rotor, the commutation is carried out based on a position sensing signal of the rotor by using an induction voltage of another phase commutated previously.

10. The inverter controller of claim 1, wherein the conduction angle in the inverter circuit is increased when a time difference between the intervals of each of outputs of position sensing signals of the rotor and a total time of the time from an occurrence of the position sensing signal until the start of the commutation work to be done by the inverter circuit plus a time duration of a spike voltage becomes longer than the predetermined reference time.

11. A compressor employing the inverter controller as defined in any one of claims 1 to 10.

12. A home appliance, including a refrigerator, employing the inverter controller as defined in any one of claims 1 to 10.

## Patentansprüche

1. Wechselrichter-Steuervorrichtung, die umfasst:
(a) eine Wechselrichterschaltung (200) zum Antreiben eines bürstenlosen Gleichstrommotors (203);
(b) eine Positionserfassungsschaltung (206) zum Erfassen einer Induktionsspannung des Motors;
(c) eine Positionserfassungs-Bestimmeinrichtung (209) zum Ausgeben eines Positionserfassungssignals eines Rotors (203r) auf Basis der durch die Positionserfassungsschaltung erfassten Induktionsspannung;
(d) einen Positionserfassungs-Warteabschnitt (208) zum Festlegen einer Wartezeit, ehe die Positionserfassungs-Bestimmeinrichtung beginnt, die Induktionsspannung zu erfassen;
(e) eine Kommutations-Steuereinrichtung (211), mit der eine Zeit zwischen einer Ausgabe des Positionserfassungssignals des Rotors und einem Beginn einer durch die Wechselrichterschaltung zu verrichtenden Kommutierungsarbeit auf Basis eines Stromflusswinkels eines Motorstroms des Motors, eines Phasenvoreilwinkels des Motorstroms in Bezug auf die Induktionsspannung und einer Drehzahl festgelegt wird;
(f) eine Stromflusswinkel-Steuereinrichtung (210), mit der der Stromflusswinkel in elektrischen Winkeln der Wechselrichterschaltung innerhalb eines bestimmten Winkelbereiches geändert wird, **dadurch gekennzeichnet, dass** der Stromflusswinkel reduziert wird, wenn eine Zeitdifferenz zwischen Intervallen jeder in der Positionserfassungs-Bestimmeinrichtung durchgeführten Positionserfassung und einer in dem Positionserfassungs-Warteabschnitt festgelegten Wartezeit kürzer wird als eine vorgegebene Bezugszeit; und
(g) eine Einrichtung (209a) zum Bestimmen einer Stromflusswinkel-Verringerungszahl, mit der eine Anzahl von Winkelverringerungs-Bestimmvorgängen gezählt wird, die bestimmt werden, wenn die Zeitdifferenz zwischen Intervallen jeder in der Positionserfassungs-Bestimmeinrichtung durchgeführten Positionserfassung und der in dem Positionserfassungs-Warteabschnitt festgelegten Wartezeit kürzer wird als die vorgegebene Bezugszeit, wobei der Stromflusswinkel verringert wird, wenn eine Anzahl von Winkelverringerungs-Bestimmvorgängen während einer vorgegebenen Anzahl von Positionserfassungen größer wird als eine vorgegebene Anzahl von Winkelverringerungen.

2. Wechselrichter-Steuervorrichtung nach Anspruch 1, wobei der Stromflusswinkel der Wechselrichterschaltung vergrößert wird, wenn die Zeitdifferenz zwischen Intervallen jeder in der Positionserfassungs-Bestimmeinrichtung durchgeführten Positionserfassung und der in dem Positionserfassungs-Warteabschnitt festgelegten Wartezeit länger wird als die vorgegebene Bezugszeit.

3. Wechselrichter-Steuervorrichtung nach Anspruch 1, die des Weiteren eine Einrichtung (209b) zum Bestimmen der Anzahl von Stromflusswinkel-Vergrößerungen umfasst, mit der eine Anzahl bestimmter Winkelvergrößerungs-Bestimmvorgängen gezählt wird, die bestimmt werden, wenn die Zeitdifferenz zwischen Intervallen jeder in der Positionserfassungs-Bestimmeinrichtung durchgeführten Positionserfassung und der in dem Positionserfassungs-Warteabschnitt festgelegten Wartezeit länger wird als die vorgegebene Bezugszeit, wobei der Stromflusswinkel vergrößert wird, wenn eine Anzahl von Winkelverringerungs-Bestimmvorgängen während einer vorgegebenen Anzahl von Positionserfassungen größer wird als eine vorgegebene Anzahl von Winkelvergrößerungen.

4. Wechselrichter-Steuervorrichtung nach Anspruch 1, wobei der vorgegebene Winkelbereich in elektrischen Winkeln größer ist als 120° und kleiner als 180°.

5. Wechselrichter-Steuervorrichtung nach Anspruch 1, wobei der bürstenlose Gleichstrommotor Permanentmagneten in dem Rotor umfasst.

6. Wechselrichter-Steuervorrichtung nach Anspruch 1, wobei der bürstenlose Gleichstrommotor Einzelpole hat.

7. Wechselrichter-Steuervorrichtung nach Anspruch 1, wobei der bürstenlose Gleichstrommotor Statorwicklungen umfasst, die jeweils 160 Windungen oder mehr als 160 Windungen haben.

8. Wechselrichter-Steuervorrichtung nach Anspruch 1, wobei der bürstenlose Gleichstrommotor sechs Pole oder mehr als sechs Pole umfasst.

9. Wechselrichter-Steuervorrichtung nach Anspruch 1, wobei, wenn die Gesamtzeit der Zeit von einem Auftreten des Positionserfassungssignals bis zum Beginn der durch die Wechselrichterschaltung zu verrichtender Kommutierungsarbeit zuzüglich der Zeitdauer einer Spitzenspannung die Intervalle zwischen jeder Ausgabe von Positionserfassungssignalen des Rotors überschreitet, die Kommutierung auf Basis eines Positionserfassungssignals des Rotors unter Verwendung einer Induktionsspannung einer anderen, zuvor kommutierten Phase ausgeführt wird.

10. Wechselrichter-Steuervorrichtung nach Anspruch 1, wobei der Stromflusswinkel in der Wechselrichterschaltung vergrößert wird, wenn eine Zeitdifferenz zwischen den Intervallen jeder Ausgabe von Positionserfassungssignalen des Rotors und einer Gesamtzeit der Zeit von einem Auftreten des Positionserfassungssignals bis zum Beginn der durch die Wechselrichterschaltung zu verrichtenden Kommutierungsarbeit zuzüglich einer Zeitdauer einer Spitzenspannung länger wird als die vorgegebene Bezugszeit.

11. Kompressor, bei dem die Wechselrichter-Steuervorrichtung nach einem der Ansprüche 1 bis 10 eingesetzt wird.

12. Haushaltsgerät, einschließlich eines Kühlschranks, bei dem die Wechselrichter-Steuervorrichtung nach einem der Ansprüche 1 bis 10 eingesetzt wird.

## Revendications

1. Dispositif de commande d'onduleur comprenant :
(a) un circuit onduleur (200) permettant d'entraîner un moteur à courant continu sans balai (203),
(b) un circuit de détection de position (206) permettant de détecter la tension d'induction du moteur,
(c) un dispositif de détermination de détection de position (209) destiné à fournir en sortie un signal de détection de position d'un rotor (203r) sur la base de la tension d'induction détectée par le circuit de détection de position,
(d) une section d'attente de détection de position (208) permettant de régler un temps d'attente avant que le dispositif de détermination de détection de position commence à détecter la tension d'induction,
(e) un contrôleur de commutation (211) permettant de régler une durée entre la sortie du signal de détection de position du rotor et le début d'une exécution d'une commutation par le circuit onduleur sur la base de l'angle de conduction du courant du moteur, de l'angle d'avance de phase du courant du moteur par rapport à la tension d'induction, ainsi que de la vitesse de rotation,
(f) un contrôleur d'angle de conduction (210) permettant de modifier l'angle de conduction en termes d'angles électriques du circuit onduleur dans une plage donnée d'angles, **caractérisé en ce que** l'angle de conduction est réduit lorsque la différence de temps entre des intervalles de chacune des détections de position réalisée dans le dispositif de détermination de détection de position et le temps d'attente réglé dans la section d'attente de détection de position devient plus courte qu'une durée de référence prédéfinie, et
(g) un dispositif de détermination du nombre représentant la réduction d'angle de conduction (209a) destiné à compter le nombre de déterminations de réduction d'angle qui sont définies lorsque la différence de temps entre les intervalles de chacune des détections de position réalisée dans le dispositif de détermination de détection de position et le temps d'attente réglé dans la section d'attente de détection de position devient plus courte que la durée de référence prédéfinie, dans lequel l'angle de conduction est réduit lorsque le nombre de déterminations de réduction d'angle, pendant un nombre prédéterminé de détections de position, devient supérieur à un nombre prédéterminé de réductions d'angle.

2. Dispositif de commande d'onduleur selon la revendication 1, dans lequel l'angle de conduction du circuit onduleur est augmenté lorsque la différence de temps entre les intervalles de chacune des détections de position réalisée dans le dispositif de détermination de détection de position et le temps d'attente réglé dans la section d'attente de détection de position devient plus longue que la durée de référence prédéfinie.

3. Dispositif de commande d'onduleur selon la revendication 1, comprenant en outre un dispositif de détermination du nombre représentant l'augmentation d'angle de conduction (209b) afin de compter le nombre de déterminations d'augmentation d'angle qui sont déterminées lorsque la différence de temps entre les intervalles de chacune des détections de position réalisée dans le dispositif de détermination de détection de position et le temps d'attente réglé dans la section d'attente de détection de position devient plus longue que la durée de référence prédéfinie, l'angle de conduction étant augmenté lorsque le nombre de déterminations de réduction d'angle pendant un nombre prédéterminé de détections de position devient supérieur à un nombre prédéfini d'augmentations d'angle.

4. Dispositif de commande d'onduleur selon la revendication 1, dans lequel la plage d'angles prédéfinie est supérieure à 120 degrés et inférieure à 180 degrés en termes d'angles électriques.

5. Dispositif de commande d'onduleur selon la revendication 1, dans lequel le moteur à courant continu sans balai inclut des aimants permanents dans le rotor.

6. Dispositif de commande d'onduleur selon la revendication 1, dans lequel le moteur à courant continu sans balai comporte des pôles saillants.

7. Dispositif de commande d'onduleur selon la revendication 1, dans lequel le moteur à courant continu sans balai inclut des enroulements de stators comportant chacun 160 tours ou plus.

8. Dispositif de commande d'onduleur selon la revendication 1 dans lequel le moteur à courant continu sans balai inclut six pôles ou plus.

9. Dispositif de commande d'onduleur selon la revendication 1, dans lequel, lorsque la durée totale du temps écoulé depuis l'apparition du signal de détection de position jusqu'au début de l'exécution de la commutation par l'onduleur plus la durée d'une tension transitoire dépasse les intervalles entre chacune des sorties des signaux de détection de position du rotor, la commutation est exécutée sur la base d'un signal de détection de position du rotor en utilisant une tension d'induction d'une autre phase qui a été précédemment commutée.

10. Dispositif de commande d'onduleur selon la revendication 1, dans lequel l'angle de conduction du circuit onduleur est augmenté lorsque la différence de temps entre les intervalles de chacune des sorties des signaux de détection de position du rotor et la durée totale du temps écoulé depuis l'apparition du signal de détection de position jusqu'au début de l'exécution de la commutation par le circuit onduleur plus la durée d'une tension transitoire devient plus longue que la durée de référence prédéfinie.

11. Compresseur utilisant le dispositif de commande d'onduleur tel qu'il est défini dans l'une quelconque des revendications 1 à 10.

12. Appareil électroménager, y compris un réfrigérateur, utilisant le dispositif de commande d'onduleur tel qu'il est défini dans l'une quelconque des revendications 1 à 10.
